# FASCICULE DE BREVET EUROPEEN

(11) **EP 3 083 406 B1**
(45) Date de publication et mention de la délivrance du brevet: **08.02.2017**
(21) Numéro de dépôt: 15753912.3
(22) Date de dépôt: 04.08.2015
(51) Int. Cl.: B64G 1/00, B64G 1/40, B64G 1/64

(54) **PROCÉDÉ ET SYSTEME POUR LE TRANSFERT D'UN SATELLITE D'UNE ORBITE INITIALE DANS UNE ORBITE DE MISSION**
VERFAHREN UND SYSTEM ZUR ÜBERTRAGUNG EINES SATELLITEN AUS EINER ERSTEN UMLAUFBAHN IN EINE MISSIONSUMLAUFBAHN
METHOD AND SYSTEM FOR TRANSFERRING A SATELLITE FROM AN INITIAL ORBIT INTO A MISSION ORBIT

(30) Priorité: 05.08.2014 FR 1457614; 02.02.2015 FR 1550764
(43) Date de publication de la demande: 26.10.2016
(73) Titulaire: Airbus Defence and Space SAS, 78130 Les Mureaux (FR)
(72) Inventeur: PONCET, Dominique, F-31402 Toulouse Cedex 4 (FR); TOURNEUR, Cyril, F-31402 Toulouse Cedex 4 (FR); CHEYNET DE BEAUPRE, René, F-31402 Toulouse Cedex 4 (FR)
(74) Mandataire: Ipside
(86) Numéro de dépôt international: PCT/EP2015/067971
(87) Numéro de publication internationale: WO 2016/020390

(56) Documents cités:
- US-A1- 2005 151 022
- US-A1- 2009 101 757

## Description

La présente invention s'inscrit dans le domaine de la mise à poste d'un engin spatial, plus particulièrement d'un satellite, sur son orbite de mission autour d'un corps céleste. Plus particulièrement, l'invention concerne un procédé de transfert d'un satellite d'une orbite initiale dans une orbite de mission autour d'un corps céleste. L'invention concerne en outre un véhicule spatial pour la mise en oeuvre d'un tel procédé, et une unité externe d'alimentation en ergols pour la mise en oeuvre d'un tel procédé, ainsi qu'un système comportant ledit véhicule spatial et ladite unité externe d'alimentation. L'invention concerne également un ensemble comportant ladite unité externe d'alimentation et un satellite, ainsi qu'un procédé de commande d'un véhicule spatial pour la mise en oeuvre d'un procédé de transfert selon l'invention. L'invention concerne également un procédé plus général de mise à poste d'un satellite sur son orbite de mission autour d'un corps céleste, notamment depuis la surface terrestre.

Les engins spatiaux tels que les satellites artificiels et autres charges utiles, qui seront désignés dans toute la présente description par le terme « satellites », sont destinés à être mis à poste en orbite autour d'un corps céleste, en particulier en orbite terrestre, notamment en orbite géostationnaire, afin d'y mener à bien leur mission, par exemple de télécommunication, d'observation, etc. Cette mise à poste est de manière habituelle réalisée en deux étapes. La première étape consiste à lancer le satellite dans l'espace, notamment depuis la surface terrestre, au moyen d'un véhicule spécifiquement dédié couramment nommé véhicule lanceur, et à l'injecter dans une orbite initiale, dite orbite d'injection. Dans la deuxième étape, le satellite est transféré depuis cette orbite d'injection jusqu'à son orbite de mission, également nommée orbite finale. Les satellites sont classiquement équipés d'un système de propulsion apte à réaliser leur maintien orbital dans l'orbite de mission, puis, le cas échéant, en fin de vie, leur transfert dans leur orbite cimetière.

Le transfert du satellite de l'orbite initiale dans l'orbite de mission peut quant à lui également être réalisé par les moyens de propulsion propres du satellite. A cet effet, les satellites peuvent être équipés de systèmes de propulsion, comportant un module de propulsion chimique à plus forte poussée pour réaliser le transfert de l'orbite d'injection à l'orbite de mission, et un module de propulsion chimique ou électrique à plus faible poussée pour les manoeuvres de maintien en orbite.

Dans les cas les plus courants, l'orbite d'injection est une orbite de transfert géostationnaire (GTO), et le satellite se transfère en orbite géostationnaire par un ou plusieurs tirs à l'apogée de cette orbite GTO, au moyen d'un propulseur chimique dédié.

Récemment, la propulsion électrique a également été utilisée pour réaliser un tel transfert. Elle permet d'obtenir de meilleures performances en comparaison avec la propulsion chimique. Cependant, la plus faible poussée de la propulsion électrique conduit à des temps de transfert plus longs. Pour la phase de transfert, cela nécessite donc d'équiper le satellite de capacités de poussée importantes, qui conduisent à des contraintes importantes de dimensionnement du système de propulsion électrique et du système de puissance pour obtenir des temps de transfert qui restent raisonnables, c'est-à-dire de l'ordre quelques mois. Ces contraintes ont un impact défavorable sur la masse et le coût du satellite.

Il a autrement été proposé par l'art antérieur de mettre en oeuvre pour réaliser le transfert du satellite, de son orbite d'injection vers son orbite de mission, un engin spatial indépendant, qui est apte à s'amarrer au satellite dans l'orbite d'injection et qui est muni de moyens de propulsion permettant de réaliser un transfert d'orbite. Un tel engin spatial, décrit notamment dans le document US 2005/0151022, est en outre équipé de moyens permettant, en orbite, le remplissage de son réservoir par du carburant, depuis un véhicule de service qui a été positionné dans ladite orbite à cette fin. La mise en oeuvre d'un tel engin spatial est cependant contraignante et coûteuse, notamment car son réapprovisionnement en ergols nécessite plusieurs étapes complexes à réaliser et chronophages.

La présente invention vise à remédier aux inconvénients des solutions proposées par l'art antérieur pour réaliser le transfert d'un satellite d'une orbite initiale dans une orbite de mission autour d'un corps céleste, par exemple autour de la Terre, notamment aux inconvénients exposés ci-avant, en proposant une solution simple et économique, qui permette d'effectuer le transfert d'orbite rapidement et en peu d'étapes.

A cet effet, il est proposé par les présents inventeurs de mettre en oeuvre, pour réaliser le transfert d'orbite du satellite, un véhicule spatial dédié, dit véhicule de transfert. Ce véhicule spatial est destiné à stationner entre deux missions dans une orbite dite d'attente proche de l'orbite initiale, et il est équipé de moyens pour sa solidarisation réversible avec le satellite, et de moyens de propulsion électrique aptes à réaliser son transfert d'orbite, avec le satellite qui en est solidaire, jusqu'à l'orbite de mission de ce dernier. De manière tout à fait avantageuse, selon la présente invention, un tel véhicule spatial est alimenté en ergols par une unité externe d'alimentation qui est lancée dans l'espace solidairement du satellite, de sorte que le volume d'ergols nécessaire au transfert d'orbite est amené au véhicule spatial en même temps que le satellite, et utilisé directement par le véhicule spatial pour réaliser ce transfert.

Ainsi, selon un premier aspect, l'invention concerne un procédé de transfert d'un satellite d'une orbite initiale notamment d'une orbite d'injection, dans une orbite de mission autour d'un corps céleste, notamment une orbite terrestre, et en particulier une orbite géostationnaire. Ce procédé comprend, dans ladite orbite initiale, une étape d'amarrage :
- d'un véhicule spatial comportant un module de propulsion électrique et un circuit fluidique d'alimentation en ergols de ce module de propulsion,
- à une unité externe d'alimentation en ergols, comportant une cuve à ergols contenant une réserve d'ergols et ancrée au satellite par des moyens d'ancrage coopérants portés respectivement par l'unité externe et par le satellite.

Le véhicule spatial et l'unité externe comportent des moyens d'amarrage réversible l'un à l'autre coopérants, comportant des moyens de connexion fluidique de la cuve à ergols de l'unité externe avec le circuit fluidique du véhicule spatial de telle sorte que l'étape d'amarrage réalise une connexion fluidique entre le circuit fluidique du véhicule spatial et la cuve à ergols de l'unité externe, permettant ainsi l'alimentation en ergols du module de propulsion depuis l'unité externe.

Le procédé de transfert comporte en outre des étapes subséquentes suivantes :
- une étape de transfert du véhicule spatial ainsi amarré à un ensemble comportant l'unité externe ancrée au satellite, jusqu'à l'orbite de mission, au moyen du module de propulsion électrique du véhicule spatial alimenté en ergols depuis la cuve à ergols de l'unité externe,
- et une étape de libération du satellite dans cette orbite de mission, ou à proximité de l'orbite de mission, dans la position orbitale souhaitée.

Par l'expression « à proximité de l'orbite de mission », on entend que la séparation du satellite et du véhicule spatial peut être effectuée sous l'arc orbital de mission du satellite, mais suffisamment près de ce dernier pour qu'il soit apte à l'atteindre, par une ou plusieurs manoeuvres de correction d'orbite de faible amplitude, par exemple nécessitant un Delta-V inférieur à 800 m/s, en général moins de 400 m/s.

Ainsi, lorsque le satellite est libéré à proximité de l'orbite de mission, il se transfère sur cette orbite de mission par ses propres moyens, typiquement par une ou plusieurs manoeuvres de poussée tangentielle à l'orbite, similaires aux manoeuvres dites Est-ouest de maintien à poste en longitude sur une orbite géostationnaire. Avantageusement, ces manoeuvres sont faites uniquement avec les moyens de propulsion utilisés pour le maintien à poste.

On entend, par moyens d'amarrage réversible, des moyens d'amarrage libérables sur commande pour provoquer la séparation du véhicule spatial et de l'unité externe.

Dans des modes de mise en oeuvre particuliers de l'invention, l'orbite de mission du satellite est une orbite terrestre, notamment l'orbite géostationnaire. L'orbite initiale est quant à elle alors préférentiellement une orbite terrestre basse.

L'étape de transfert de l'orbite initiale dans l'orbite de mission peut être effectuée selon toute trajectoire classique en elle-même, simple ou sophistiquée.

Préférentiellement, l'étape de transfert est réalisée de sorte à être la plus rapide possible, et à minimiser notamment ainsi le temps d'exposition du satellite aux radiations des ceintures de Van Allen. A cet effet, il s'avère tout à fait avantageux dans le cadre de l'invention que le module de propulsion du véhicule spatial présente une capacité importante de Delta-V avec forte poussée, de sorte à atteindre des temps de transfert courts, notamment d'environ deux mois.

Le procédé de transfert selon l'invention peut en outre répondre à l'une ou plusieurs des caractéristiques suivantes, mises en oeuvre séparément ou en chacune de leurs combinaisons techniquement opérantes.

Dans des modes de mise en oeuvre particuliers de l'invention, lors de l'étape de transfert, le véhicule spatial est alimenté en ergols directement depuis la cuve à ergols de l'unité externe, c'est-à-dire sans passer par un quelconque réservoir qui appartiendrait en propre au véhicule spatial. Ainsi, dans des modes de mise en oeuvre particuliers de l'invention, le circuit fluidique comporte un ensemble de canalisations, vannes, pompes, etc., mais est exempt de tout réservoir à ergols.

Dans des modes de mise en oeuvre particuliers de l'invention, le procédé comprend une étape préalable de rendez-vous, dans l'orbite initiale, du véhicule spatial avec l'ensemble comportant l'unité externe et le satellite, de préférence du côté de l'unité externe. On entend ici, par étape de rendez-vous, toutes les phases de mouvement du véhicule spatial et de l'ensemble formé par le satellite et l'unité externe, nécessaires à et précédant l'amarrage physique à proprement parler du véhicule spatial à l'unité externe. Pour cette étape de rendez-vous, la trajectoire d'approche du véhicule spatial fait appel aux connaissances générales de l'homme du métier, notamment en ce qui concerne les techniques de rendez-vous (RV) orbital, compte-tenu de la connaissance de la dynamique de l'ensemble formé par le satellite et l'unité externe. Cette étape est de préférence commandée depuis le sol.

Dans des modes de mise en oeuvre particuliers de l'invention, l'étape de libération du satellite dans l'orbite de mission est réalisée par commande de la libération des moyens d'amarrage du véhicule spatial à l'unité externe, cette commande étant préférentiellement transmise par le véhicule spatial.

Dans des variantes de l'invention, les moyens d'ancrage de l'unité externe au satellite sont du type libérables sur commande pour provoquer la séparation de l'unité externe et du satellite, et l'étape de libération du satellite dans l'orbite de mission est réalisée par commande de la libération des moyens d'ancrage de l'unité externe au satellite. Là encore, cette commande est préférentiellement transmise par le véhicule spatial, par le biais de moyens de connexion électrique du véhicule spatial à l'unité externe, jusqu'aux moyens d'ancrage de l'unité externe au satellite.

Dans des modes de mise en oeuvre particuliers de l'invention, le procédé comprend, après l'étape de libération du satellite dans l'orbite de mission, une étape de déplacement du véhicule spatial jusqu'à une orbite cimetière et de libération de l'unité externe dans cette orbite cimetière.

Le procédé selon l'invention peut en outre comprendre, après l'étape de libération du satellite dans l'orbite de mission, et le cas échéant après l'étape de libération de l'unité externe dans une orbite cimetière, une étape de déplacement du véhicule spatial jusqu'à une orbite dite d'attente. Cette orbite d'attente est de préférence disposée à proximité de l'orbite initiale du prochain satellite dont le véhicule spatial sera chargé de réaliser le transfert, par mise en oeuvre d'un procédé de transfert selon l'invention. Cette étape de retour du véhicule spatial dans une orbite d'attente peut être lente, de sorte à minimiser la consommation en ergols nécessaire à sa réalisation.

Dans des modes de mise en oeuvre particuliers de l'invention, le véhicule spatial comporte un réservoir à ergols en connexion fluidique avec le circuit fluidique, et le procédé comprend, entre l'étape d'amarrage et l'étape de transfert, une étape de transvasement d'ergols de la cuve à ergols de l'unité externe dans le réservoir à ergols du véhicule spatial.

Lorsque les ergols contenus dans la cuve à ergols de l'unité externe sont de type gazeux, cette étape de transvasement d'ergols de la cuve à ergols de l'unité externe dans le réservoir à ergols du véhicule spatial est de préférence réalisée par connexion fluidique de la cuve à ergols et du réservoir à ergols, de préférence via le circuit fluidique, de sorte à permettre le transvasement d'ergols par équilibrage des pressions entre la cuve à ergols et le réservoir à ergols.

Dans la mesure où, lors de l'amarrage du véhicule spatial à l'unité externe, la cuve à ergols de cette dernière contient des ergols gazeux, alors que le réservoir à ergols du véhicule spatial est sensiblement vide, un tel équilibrage des pressions s'effectue spontanément, dans le sens d'un remplissage du réservoir à ergols du véhicule spatial par une partie des ergols initialement contenus dans la cuve à ergols de l'unité externe. Les ergols ainsi spontanément transférés dans le réservoir du véhicule spatial constituent pour ce dernier une réserve, qui permet d'alimenter le module de propulsion électrique après séparation du véhicule spatial et de l'unité externe, si bien que le véhicule spatial est avantageusement autonome pour toute la phase de retour depuis l'orbite de mission, le cas échéant depuis l'orbite cimetière, jusqu'à son orbite d'attente.

Ainsi, dans des modes de mise en oeuvre préférés de l'invention, le circuit fluidique du véhicule spatial comporte des moyens d'obturation mobiles entre une position de fermeture interdisant la circulation de fluide dans le circuit fluidique entre le réservoir à ergols et le module de propulsion, et une position d'ouverture autorisant cette circulation de fluide, et des moyens d'actionnement de ces moyens d'obturation entre la position de fermeture et la position d'ouverture. Le procédé selon l'invention comprend alors, après l'étape de libération du satellite dans l'orbite de mission, et le cas échéant après une étape de séparation du véhicule spatial et de l'unité externe dans une orbite cimetière, une étape d'actionnement de ces moyens d'obturation du circuit fluidique, de sorte à autoriser la circulation de fluide depuis le réservoir à ergols du véhicule spatial jusqu'au module de propulsion du véhicule spatial, et ainsi l'alimentation en ergols de ce module de propulsion directement depuis le réservoir à ergols du véhicule spatial.

Le véhicule spatial selon l'invention peut également comporter un système de propulsion du type à gaz froid, utilisant avantageusement le même ergol que le module de propulsion électrique. Ce système de propulsion à gaz froid peut utiliser le même réservoir à ergols que celui utilisé par le module de propulsion électrique, ou un réservoir à ergols spécifique. Dans ce dernier cas, le réservoir spécifique est avantageusement placé dans le circuit fluidique du véhicule spatial de sorte à être alimenté avant le réservoir utilisé par le module de propulsion électrique, de sorte à y maximiser la pression. Ceci s'avère particulièrement avantageux lorsque le système de propulsion à gaz froid est utilisé pour les manoeuvres de rendez-vous, pour obtenir de meilleures performances.

Le procédé selon l'invention s'applique également au transfert simultané d'une pluralité de satellites, tous ancrés à l'unité externe, de l'orbite initiale dans leurs orbites de mission respectives. La libération de ces satellites s'effectue alors de préférence simultanément, dans une orbite disposée à proximité de chacune de ces orbites de mission, chaque satellite se transférant ensuite sur son orbite de mission propre par ses propres moyens, par exemple par une ou plusieurs manoeuvres de poussée tangentielle à l'orbite, en particulier lorsque les satellites sont destinés à être positionnés sur la même orbite.

Autrement, le procédé peut comporter une succession d'étapes de :
- libération d'un satellite ou plusieurs satellites dans leur orbite de mission,
- puis transfert jusqu'à l'orbite de mission du ou des satellites suivants, au moyen du module de propulsion électrique du véhicule spatial alimenté en ergols depuis la cuve à ergols de l'unité externe,
- libération de ce ou ces satellites dans leur orbite de mission,
- etc.

A cet effet, il est avantageusement prévu selon l'invention que l'unité externe puisse comporter des moyens d'ancrage simultané à ladite pluralité de satellites, chacun desdits satellites comportant des moyens d'ancrage coopérants.

En particulier, la présente invention s'étend aux configurations dans lesquelles l'unité externe est ancrée à chacun des satellites par le biais d'un dispenseur, ou tout autre élément de fonction similaire. Ainsi, on englobe dans la présente description, dans l'expression unité externe, les composites « unité externe - dispenseur », dans lesquels les moyens d'ancrage au(x) satellite(s) sont portés par le dispenseur, et les moyens d'amarrage au véhicule spatial selon l'invention sont portés par l'unité externe en elle-même.

Les dispenseurs sont des éléments bien connus de l'homme du métier, utilisés de manière classique en elle-même pour le lancement de constellations de satellites identiques au moyen du même véhicule lanceur. Ils comportent, principalement, des moyens d'ancrage réversible aux satellites, des moyens de libération des satellites, par exemple de type pyrotechnique, et une interface de connexion avec le véhicule lanceur.

Selon l'invention, cette interface de connexion du dispenseur est avantageusement mise à profit pour assurer l'ancrage, de préférence réversible, et la connexion électrique du dispenseur, non pas avec le véhicule lanceur, mais avec l'unité externe, qui comporte elle-même l'interface de connexion avec le véhicule lanceur.

Le procédé de transfert selon l'invention comprend alors les mêmes étapes que celles décrites ci-avant, chaque satellite de la pluralité de satellites étant, en dernière étape, libéré du dispenseur dans son orbite de mission ou à proximité de son orbite de mission, de manière classique en elle-même. Le dispenseur reste quant à lui attaché à l'unité externe.

Dans des modes de mise en oeuvre particuliers de l'invention, le procédé comprend, après l'étape de libération des satellites dans l'orbite de mission, une étape de déplacement du véhicule spatial jusqu'à une orbite dans laquelle les risques de collision futurs sont minimisés, par exemple une orbite cimetière, ou une orbite permettant une réentrée à moyen terme, suivant les réglementations et normes en vigueur. Dans cette orbite, le procédé selon l'invention prévoit alors préférentiellement une étape de libération soit du dispenseur seul, soit du dispenseur et de l'unité externe qui lui est liée.

Avantageusement, les moyens de commande dans le dispenseur sont réduits au minimum, et ce dernier n'a besoin d'aucune autonomie, puisqu'il ne réalise aucune manoeuvre en lui-même, autre que l'éjection des satellites auxquels il est ancré.

Selon un autre aspect, la présente invention concerne un procédé de commande à distance d'un véhicule spatial pour la mise en oeuvre des étapes d'un procédé de transfert selon l'invention, répondant à l'une ou plusieurs des caractéristiques ci-avant ou ci-après, plus particulièrement d'un véhicule spatial comportant un module de propulsion électrique, un circuit fluidique d'alimentation en ergols de ce module de propulsion, et des moyens d'amarrage réversible à une unité externe d'alimentation en ergols, comportant des moyens de connexion fluidique de cette unité externe avec le circuit fluidique permettant l'alimentation en ergols du module de propulsion depuis l'unité externe.

Selon ce procédé, le véhicule spatial est commandé à distance par un dispositif de commande, en particulier au sol, des signaux de commande étant successivement déterminés et envoyés au véhicule spatial par ce dispositif de commande, pour la réalisation des étapes du procédé de transfert selon l'invention.

Un autre aspect de l'invention concerne un dispositif de commande qui comporte des moyens configurés pour commander, de préférence à distance, notamment depuis la surface terrestre, un véhicule spatial pour la mise en oeuvre d'un procédé de transfert selon l'invention, répondant à l'une ou plusieurs des caractéristiques ci-avant ou ci-après.

Selon un autre aspect, la présente invention concerne un véhicule spatial, dit véhicule de transfert, pour la mise en oeuvre d'un procédé de transfert selon l'invention.

Ce véhicule spatial comporte :
- un module de propulsion électrique,
- un circuit fluidique d'alimentation en ergols du module de propulsion,
- et un réservoir à ergols, en connexion fluidique avec le circuit fluidique.

Il comporte en outre des moyens d'amarrage réversible, c'est-à-dire libérables sur commande pour provoquer la séparation, du véhicule spatial à une unité externe d'alimentation en ergols ; celle-ci est lancée attachée au satellite dont le transfert d'orbite doit être réalisé. Ces moyens d'amarrage réversible comportent des moyens de connexion fluidique du circuit fluidique avec l'unité externe. Le circuit fluidique est en outre configuré pour permettre :
- l'alimentation directe en ergols du module de propulsion depuis l'unité externe, c'est-à-dire sans que ces ergols n'aient à passer par le réservoir à ergols du véhicule spatial,
- et une connexion fluidique entre le réservoir à ergols et l'unité externe.

Le module de propulsion électrique du véhicule spatial est avantageusement configuré pour être apte à réaliser le transfert d'orbite souhaité de l'assemblage constitué par le véhicule spatial, l'unité externe et le satellite, préférentiellement en un temps relativement réduit.

Le véhicule spatial est ainsi avantageusement configuré de telle sorte que la connexion fluidique, par les moyens de connexion fluidique, du circuit fluidique d'alimentation du module de propulsion électrique avec l'unité externe, permette l'alimentation en ergols du module de propulsion directement depuis cette unité externe, c'est-à-dire sans passer par le réservoir du véhicule spatial.

Le véhicule spatial comporte en outre un réservoir à ergols qui lui est propre, et des moyens de connexion fluidique de ce réservoir et du module de propulsion électrique, via le circuit fluidique, selon une voie au moins partiellement distincte de la voie d'alimentation du module de propulsion électrique depuis les moyens de connexion fluidique à l'unité externe.

Dans des modes de réalisation particuliers, le véhicule spatial selon l'invention répond en outre aux caractéristiques suivantes, mises en oeuvre séparément ou en chacune de leurs combinaisons techniquement opérantes.

Préférentiellement, le réservoir à ergols est dimensionné pour permettre l'alimentation en ergols du véhicule spatial pour la réalisation des seules opérations suivantes : le transfert du véhicule spatial, le cas échéant amarré à l'unité externe sensiblement vide d'ergols, de l'orbite de mission du satellite vers une orbite d'attente proche de l'orbite d'injection du satellite ; le maintien du véhicule spatial dans cette orbite d'attente ; le transfert du véhicule spatial de cette orbite d'attente à l'orbite d'injection du satellite, jusqu'à un point de rendez-vous avec ce dernier ; ainsi, le cas échéant, que le transfert préalable du véhicule spatial amarré à l'unité externe sensiblement vide d'ergols de l'orbite de mission du satellite jusqu'à une orbite cimetière dans laquelle l'unité externe est destinée à être libérée. En particulier, le réservoir à ergols du véhicule spatial n'est pas dimensionné pour permettre l'alimentation en ergols du véhicule spatial pour la réalisation du transfert de l'assemblage formé par le véhicule spatial, l'unité externe et le satellite, de l'orbite initiale dans l'orbite de mission du satellite.

La détermination du volume interne de réception des ergols du réservoir permettant de répondre à de telles caractéristiques entre dans les compétences de l'homme du métier, qui prendra à cet effet notamment en compte les caractéristiques du module de propulsion, la masse du véhicule spatial, et les orbites entre lesquelles le transfert doit être réalisé.

Dans des modes de réalisation particuliers de l'invention, le circuit fluidique comporte des moyens d'obturation mobiles entre une position de fermeture interdisant la circulation de fluide dans le circuit fluidique entre le réservoir à ergols et le module de propulsion, et une position d'ouverture autorisant cette circulation de fluide, ainsi que des moyens d'actionnement de ces moyens d'obturation entre la position de fermeture et la position d'ouverture.

Ces moyens d'obturation peuvent notamment être formés par la combinaison d'un premier organe de type vanne présentant une position de fermeture et une position d'ouverture, et d'un second organe de type clapet anti-retour, disposés sur deux branches du circuit fluidique en sortie du réservoir à ergols du véhicule spatial. Les moyens d'actionnement des moyens d'obturation peuvent alors consister en des moyens de sollicitation de la vanne en ouverture ou en fermeture.

Une telle configuration permet avantageusement de maîtriser la circulation d'ergols depuis le réservoir du véhicule spatial vers le module de propulsion, et par voie de conséquence de contrôler les phases durant lesquelles le module de propulsion est alimenté en ergols par le propre réservoir à ergols du véhicule spatial, et celles où il ne l'est pas.

Le circuit fluidique peut en outre comporter un organe d'obturation, par exemple du type clapet anti-retour, autorisant la circulation de fluide depuis les moyens de connexion fluidique vers le réservoir à ergols, et interdisant le passage de fluide depuis le réservoir à ergols vers les moyens de connexion fluidique à l'unité externe. Lorsque le véhicule spatial est fluidiquement connecté à l'unité externe, un tel organe d'obturation autorise avantageusement la circulation d'ergols depuis l'unité externe vers le réservoir à ergols du véhicule spatial, mais non l'inverse, notamment après le transvasement d'ergols vers le réservoir.

Dans des modes de réalisation particuliers de l'invention, le circuit fluidique d'alimentation du véhicule spatial comporte une branche, dite branche d'alimentation, reliant les moyens de connexion fluidique et le module de propulsion, et une branche de dérivation de cette branche d'alimentation, fluidiquement reliée au module de propulsion du véhicule spatial. Le réservoir à ergols se trouve en connexion fluidique avec cette branche de dérivation.

Dans une telle configuration, les moyens d'obturation aptes à autoriser ou interdire la circulation de fluide dans le circuit fluidique entre le réservoir à ergols et le module de propulsion, peuvent être disposés sur cette branche de dérivation.

Le véhicule spatial peut également comporter un système de propulsion à gaz froid, utilisant avantageusement le même ergol que la propulsion électrique. Ce système de propulsion à gaz froid peut utiliser le même réservoir que celui utilisé par le module de propulsion électrique du véhicule spatial, ou bien un réservoir spécifique qui peut être connecté à la branche de dérivation du circuit fluidique d'alimentation du véhicule spatial.

Dans des modes de réalisation particuliers de l'invention, le véhicule spatial comporte des moyens de rendez-vous, de préférence de type semi-automatiques, avec l'unité externe localisée sur l'orbite initiale. Ces moyens de rendez-vous sont classiques en eux-mêmes. A cet effet, le véhicule spatial comporte notamment des moyens de réalisation d'opérations de proximité, tels que rétroréflecteurs, caméra vidéo, et/ou laser, en particulier pour la réalisation de la boucle fermée finale de la manoeuvre de rendez-vous.

Pendant la phase de rendez-vous, le véhicule spatial peut avantageusement utiliser son système de propulsion à gaz froid, s'il est pourvu d'un tel système.

Selon une caractéristique avantageuse de l'invention, le véhicule spatial comporte des moyens de connexion électrique avec l'unité externe. Ces moyens de connexion électrique sont notamment configurés pour transmettre des signaux de commande émanant du véhicule spatial à l'unité externe.

Les moyens d'amarrage à l'unité externe peuvent être de tout type classique en lui-même. Les moyens non générateurs de débris à leur libération sont particulièrement préférés dans le cadre de l'invention. Préférentiellement, ces moyens d'amarrage sont en outre choisis pour générer de faibles niveaux de chocs afin de ne pas impacter la performance en vol des équipements du satellite. Les moyens d'amarrage sont par exemple de type mécanique magnétique ou électromagnétique, bien connus de l'homme du métier.

Outre des moyens de connexion mécanique et/ou (électro)magnétique, et des moyens de connexion fluidique et électrique avec l'unité externe d'alimentation, les moyens d'amarrage peuvent également comporter des moyens de connexion de communication avec cette unité externe.

Le module de propulsion électrique du véhicule spatial est configuré pour être apte à en contrôler l'attitude et l'orbite pour toutes les opérations associées au transfert du satellite fixé à l'unité externe de l'orbite initiale à l'orbite de mission, et son retour pour une mission ultérieure.

Préférentiellement, le module de propulsion électrique comporte des propulseurs à forte poussée, permettant un transfert rapide de l'orbite initiale à l'orbite de mission du satellite. De tels propulseurs peuvent être notamment du type à effet Hall, bien connus de l'homme du métier.

Le module de propulsion électrique peut alors également comporter des propulseurs supplémentaires à plus faible poussée et plus forte impulsion spécifique, utilisables pour une phase de retour du véhicule spatial à l'orbite d'attente. Pendant cette phase de retour, la poussée peut être plus faible, puisque la masse à transférer est plus faible. En outre, elle peut être plus lente, puisqu'il n'y a notamment plus de contrainte opérationnelle liée au satellite. Ces propulseurs peuvent notamment être du type ionique à grille, bien connus de l'homme du métier.

Les propulseurs à forte poussée, non sollicités pendant cette phase, pourront être utilisés sur un plus grand nombre de missions, à durée de vie constante. Dans une telle configuration, la consommation globale d'ergols est en outre avantageusement réduite.

Les propulseurs à faible poussée peuvent être disposés sur la même face du véhicule spatial que les propulseurs à forte poussée, ou sur une face différente. En particulier, les propulseurs à faible poussée peuvent être disposés sur la face du véhicule spatial comprenant les moyens d'amarrage à l'unité externe, alors que les propulseurs à forte poussée sont disposés au niveau d'une face distincte, notamment opposée. La face comprenant les moyens d'amarrage devient alors utilisable après la libération de l'unité externe, avec un champ de vue dégagé. Une telle configuration limite avantageusement les interférences des jets de propulsion avec l'unité externe et le satellite.

Dans des variantes de l'invention, le module de propulsion électrique peut comporter des propulseurs à poussée et impulsion spécifique variables, permettant un fonctionnement à forte poussée et faible impulsion spécifique d'une part, et à faible poussée et forte impulsion spécifique d'autre part, tels que des propulseurs relevant de la technologie Elwing.

Le véhicule spatial constitue un véhicule entièrement autonome, comportant ses propres moyens de communication, notamment avec un module de commande déporté, en particulier au sol, ses propres moyens de manoeuvre, etc. Il peut être lancé dans l'espace en même temps que le satellite, ou préalablement à celui-ci. Il est avantageusement utilisable pour plusieurs missions successives.

Un autre aspect de l'invention concerne une unité externe pour la mise en oeuvre d'un procédé de transfert selon l'invention, pour l'alimentation en ergols d'un véhicule spatial selon l'invention.

Cette unité externe comporte une cuve à ergols, ainsi que :
- des moyens d'ancrage à un satellite, disposés au niveau d'une première zone de l'unité externe,
- et des moyens d'amarrage aptes à coopérer avec des moyens d'amarrage réversible d'un véhicule spatial, disposés au niveau d'une deuxième zone de l'unité externe et comportant des moyens de connexion fluidique de la cuve à ergols avec le véhicule spatial.

La cuve à ergols est avantageusement dimensionnée pour permettre l'alimentation en ergols du module de propulsion du véhicule spatial pour la réalisation de l'ensemble des opérations suivantes : le transfert du véhicule spatial, amarré à l'unité externe elle-même fixée au satellite, de l'orbite initiale à l'orbite de mission du satellite ; le transfert du véhicule spatial amarré à l'unité externe d'alimentation de l'orbite de mission du satellite jusqu'à une orbite cimetière pour l'unité externe ; le transfert du véhicule spatial, le cas échéant amarré à l'unité externe, jusqu'à une orbite d'attente proche de l'orbite d'injection du satellite ; le maintien du véhicule spatial dans cette orbite d'attente ; et le transfert du véhicule spatial de cette orbite d'attente à l'orbite d'injection du satellite, jusqu'à un point de rendez-vous avec ce dernier.

La détermination du volume interne de réception des ergols de la cuve à ergols de l'unité externe, permettant d'effectuer de telles opérations, entre dans les compétences de l'homme du métier, qui prendra à cet effet notamment en compte les caractéristiques du module de propulsion, la masse du véhicule spatial, de l'unité externe et du satellite, et les orbites entre lesquelles le transfert doit être réalisé.

L'unité externe peut en outre répondre aux caractéristiques suivantes, mises en oeuvre séparément ou en chacune de leurs combinaisons techniquement opérantes.

Dans des modes de réalisation particuliers de l'invention, les moyens d'ancrage de l'unité externe au satellite sont du type libérables sur commande pour provoquer la séparation de l'unité externe et du satellite. Ces moyens sont préférentiellement choisis pour être non générateurs de débris à leur libération. Une telle caractéristique permet avantageusement de limiter la masse du satellite à poste. La face du satellite ainsi libérée devient en outre disponible pour d'autres usages.

Dans des modes de réalisation particuliers de l'invention, l'unité externe comporte des moyens de connexion électrique avec le véhicule spatial. La libération des moyens d'ancrage au satellite est alors préférentiellement asservie à ces moyens de connexion électrique, de telle sorte que cette libération peut avantageusement être contrôlée depuis le véhicule spatial. Le satellite demeure ainsi purement passif jusqu'à sa libération dans son orbite de mission, ce qui simplifie les interfaces avec le véhicule spatial et les coûts d'adaptation.

L'unité externe comporte en outre de préférence des moyens passifs de rendez-vous avec le véhicule spatial, destinés à coopérer avec les moyens de rendez-vous actifs portés par ce dernier. Ces moyens de rendez-vous sont bien connus de l'homme du métier.

Dans des modes de réalisation particuliers de l'invention, l'unité externe comporte des moyens d'ancrage simultané à une pluralité de satellites, comportant par exemple un dispenseur, comme exposé si-avant.

Selon un autre aspect, la présente invention concerne un ensemble comportant une unité externe selon l'invention, dans laquelle la cuve à ergols contient des ergols pour propulsion électrique, et un satellite comportant des moyens d'ancrage aptes à coopérer avec les moyens d'ancrage de l'unité externe. Cette unité externe est fixée, de manière réversible, au satellite par coopération des moyens d'ancrage du satellite et des moyens d'ancrage de l'unité externe.

Le satellite peut être classique en lui-même. Il peut notamment comporter des charges utiles, des moyens de collection d'énergie solaire, sous forme de panneaux solaires, en général déployables, des moyens de communication utilisant des antennes à réflecteurs déployables, et un module de service, assurant ses fonctions de base, et comprenant notamment des systèmes d'alimentation électrique, de contrôle et de navigation, de télémétrie et de communication, etc., ainsi que le câblage électrique associé. Il comporte également des moyens de propulsion et une réserve d'ergol suffisants pour les manoeuvres de maintien orbital, visant à corriger la position du satellite sur son orbite de mission, et le cas échéant pour des manoeuvres de changement d'orbite pour son transfert, en fin de vie, dans son orbite cimetière. L'ensemble de ces éléments sont bien connus de l'homme du métier et ne seront pas décrits de manière détaillée dans la présente description. Selon l'invention, les moyens de propulsion et la réserve d'ergols propres du satellite sont notamment configurés pour être inaptes à assurer un transfert d'orbite du satellite de l'orbite initiale à son orbite de mission, si bien que le poids et le volume qu'ils occupent sont avantageusement limités.

Sur le satellite, les moyens d'ancrage avec l'unité externe sont de préférence disposés au niveau de la face normalement utilisée pour réaliser l'interface avec le véhicule lanceur, si bien que l'ancrage de l'unité externe sur le satellite ne nécessite avantageusement pas de modifications importantes de ce dernier.

Le satellite et l'unité externe sont en outre de préférence configurés de telle sorte que leurs moyens d'ancrage coopérants réalisent également une connexion électrique et de communication. L'unité externe comporte en outre préférentiellement des moyens lui permettant, lorsqu'elle est d'une part amarrée au véhicule spatial selon l'invention, et d'autre part ancrée au satellite, de constituer une interface de communication entre le satellite et le véhicule spatial. Ainsi le contrôle du satellite est possible depuis un dispositif de commande, notamment de commande à distance, du véhicule spatial. Le satellite peut de ce fait avantageusement rester passif jusqu'à sa libération dans son orbite de mission, tout en étant contrôlable préalablement à cette libération.

Dans des modes de réalisation particuliers de l'invention, l'unité externe comportant des moyens d'ancrage simultané à une pluralité de satellites, comprenant notamment un dispenseur, ledit ensemble comporte une pluralité de satellites comportant chacun des moyens d'ancrage aptes à coopérer avec les moyens d'ancrage de l'unité externe, cette unité externe étant fixée de manière réversible à chacun des ces satellites par coopération des moyens d'ancrage du satellite et des moyens d'ancrage de l'unité externe, par exemple portés par le dispenseur.

Un autre aspect de la présente invention concerne un système pour le transfert d'un satellite d'une orbite initiale dans une orbite de mission autour d'un corps céleste, notamment une orbite terrestre, en particulier géostationnaire, comportant un véhicule spatial selon l'invention et une unité externe selon l'invention.

Dans ce système, l'unité externe peut être fixée au satellite dont le transfert doit être réalisé. L'unité externe peut, concomitamment ou non, être elle-même être amarrée au véhicule spatial.

Ainsi, le système selon l'invention peut notamment présenter l'une quelconque des configurations suivantes, dans lesquelles les différents composants suivants sont solidaires les uns des autres : véhicule spatial amarré à l'unité externe fixée au satellite : véhicule spatial amarré à l'unité externe non fixée au satellite.

Dans des modes de réalisation particuliers de l'invention, ce système peut en outre comporter un dispositif de commande, notamment à distance, comportant des moyens configurés pour commander le véhicule spatial, par transmission de signaux de commande successifs audit véhicule spatial, pour réaliser les étapes du procédé selon l'invention de transfert du satellite de l'orbite initiale dans l'orbite de mission, ainsi de préférence que l'ensemble des opérations annexes réalisées par le véhicule spatial pour permettre sa remise à poste dans l'orbite d'attente en vue d'une mission ultérieure.

Le dispositif de commande, notamment de commande au sol, est classique en lui-même et peut comporter une ou plusieurs antennes pour recevoir des signaux du véhicule spatial, et émettre des signaux d'instructions en direction de ce dernier. Il peut comprendre des ordinateurs et moyens de traitement et de stockage des données reçues du véhicule spatial. Ce dernier est notamment de préférence équipé d'un module de commande, comportant notamment un ou plusieurs processeurs, asservi à un module de communication coopérant avec le dispositif de commande.

Selon un autre aspect, la présente invention concerne un procédé de mise à poste d'un satellite sur son orbite de mission autour d'un corps céleste, notamment une orbite terrestre, en particulier géostationnaire, qui comprend des étapes de :
- fixation au satellite d'une unité externe selon l'invention, et introduction d'ergols pour propulsion électrique dans la cuve à ergols de cette unité externe, de sorte à former un ensemble selon l'invention ; ces deux étapes pouvant être réalisées dans n'importe quel ordre ;
- lancement de cet ensemble dans l'espace, notamment depuis la surface terrestre, et injection dans une orbite initiale autour du corps céleste ;
- et mise en oeuvre d'un procédé de transfert selon l'invention, pour réaliser le transfert de cet ensemble de l'orbite initiale dans l'orbite de mission.

Le lancement dans l'espace peut être réalisé au moyen de tout véhicule lanceur classique en lui-même, comportant notamment des moyens de propulsion et des moyens de guidage aptes à assurer son lancement depuis la Terre et l'injection de l'ensemble comportant le satellite et l'unité externe dans l'orbite initiale, généralement dans une orbite terrestre basse.

Dans des modes de mise en oeuvre particuliers de l'invention, l'unité externe est fixée à une pluralité de satellites, par exemple par le biais d'un dispenseur qu'elle comporte à cet effet, de sorte à ce que ladite pluralité de satellites soit lancée simultanément, par le biais du même véhicule lanceur.

Dans des modes de mise en oeuvre préférés de l'invention, le procédé de mise à poste du satellite comprend la mise en orbite d'un véhicule spatial selon l'invention dans une orbite dite d'attente autour dudit corps céleste, de préférence disposée à proximité de l'orbite initiale ou dans cette orbite initiale. Cette mise en orbite peut être effectuée simultanément au lancement et à l'injection du satellite dans l'orbite initiale, au moyen du même véhicule lanceur, ou être effectuée préalablement, par un autre véhicule lanceur.

Par tous ses aspects, la présente invention permet avantageusement de réaliser des économies de coût importantes pour la réalisation des opérations de mise à poste d'une pluralité de satellites dans leurs orbites de mission. Ceci est notamment du au fait que le véhicule spatial est utilisable pour de nombreuses missions successives, les ergols nécessaires à l'alimentation de son module de propulsion électrique, pour la réalisation d'une mission complète, étant entièrement apportés avec le satellite, qui plus est dans une unité externe détachable de ce dernier sur commande. Le gain en masse par rapport aux systèmes conventionnels mettant en oeuvre un transfert d'orbite chimique est en outre important. Par rapport à un transfert électrique, l'invention permet par ailleurs avantageusement de réduire la durée de transfert du satellite de l'orbite initiale à l'orbite de mission, notamment grâce à une configuration appropriée du module de propulsion électrique du véhicule spatial, ce qui entraîne également une économie de coûts importante pour les opérateurs du satellite. Enfin, le gain apporté par la présente invention se mesure également en termes de simplification du satellite, par rapport aux systèmes classiques prévoyant un transfert d'orbite réalisé par les moyens propres du satellite, induisant là encore des économies de masse et de coût de ce dernier, ainsi que des coûts associés à son lancement.

Les caractéristiques et avantages de l'invention apparaîtront plus clairement à la lumière des exemples de réalisation et de mise en oeuvre ci-après, fournis à simple titre illustratif et nullement limitatifs de l'invention, avec l'appui des figures 1 à 4, dans lesquelles :
- la figure 1 représente de manière schématique une unité externe conforme à l'invention, fixée d'une part à un satellite et d'autre part à un véhicule lanceur, en configuration de lancement ;
- la figure 2 représente de manière schématique une unité externe conforme à l'invention, fixée d'une part à un satellite et d'autre part à un véhicule spatial conforme à l'invention ;
- la figure 3 illustre de manière schématique la connexion fluidique entre une unité externe et un véhicule spatial conformes à l'invention, ainsi que différentes configurations de circulation de fluide au sein dudit véhicule spatial ;
- et la figure 4 illustre de manière schématique les différentes étapes d'un procédé de mise à poste d'un satellite sur son orbite de mission, conforme à un mode de mise en oeuvre particulier de l'invention.

Dans la description ci-après, pour plus de commodité, l'invention sera décrite en référence à une configuration de lancement d'un satellite depuis surface terrestre, pour une mise à poste dans une orbite de mission géostationnaire (GEO) réalisée en deux étapes, comprenant une première étape d'injection du satellite dans une orbite terrestre basse initiale (LEO). L'invention ne se limite cependant nullement à une telle configuration, et s'applique également de manière similaire à toutes autres combinaisons de surface de lancement, orbite initiale et orbite de mission.

Un système selon l'invention pour la mise à poste d'un satellite 10 sur son orbite de mission comporte les différents composants suivants : une unité externe 20, un véhicule spatial 30, qui sera désigné ci-après par l'expression véhicule de transfert, et un dispositif de commande du véhicule spatial 50.

On se place dans la description ci-après dans le cas de la mise à poste d'un seul satellite, étant entendu que cet enseignement est directement transposable à la mise à poste d'une pluralité de satellites lancés en même temps par le même véhicule lanceur, et tous ancrés à la même unité externe. L'unité externe comporte alors à cet effet des moyens d'ancrage réversible à chacun de ladite pluralité de satellites, et des moyens de libération de chacun de ces satellites. Ces moyens de libération peuvent être actionnables aussi bien conjointement, que séparément, de sorte à pouvoir libérer les satellites, au choix, soit simultanément dans la même orbite, soit successivement, dans des orbites différentes.

Schématiquement, l'unité externe 20 est destinée à être fixée au satellite 10 sur la surface terrestre, pour former un ensemble destiné à être injecté dans l'orbite LEO. Le véhicule de transfert 30 est quant à lui destiné à prendre en charge cet ensemble dans l'orbite LEO, pour réaliser son transfert jusqu'à l'orbite GEO. Le véhicule de transfert, après avoir le cas échéant libéré l'unité externe 20 dans une orbite cimetière, est destiné à être remis à poste dans une orbite dite d'attente, à proximité de l'orbite LEO, en vue de la prise en charge ultérieure d'un nouvel ensemble constitué d'un nouveau satellite et d'une nouvelle unité externe, à transférer à son tour dans l'orbite GEO (ou dans une autre orbite de mission).

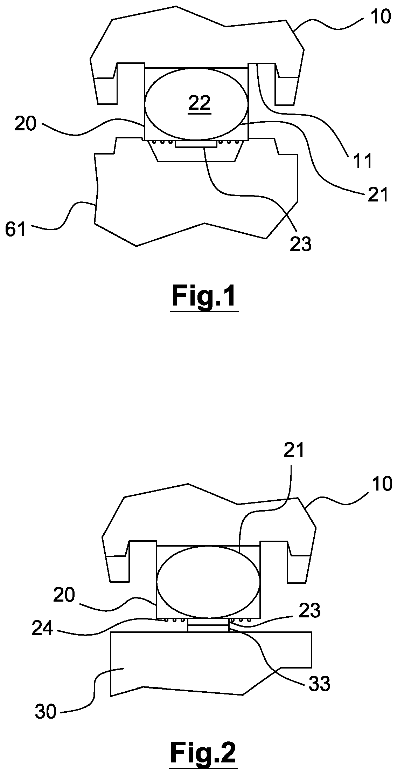

Le satellite 10, représenté de manière schématique sur la figure 1, est classique en lui-même. Au niveau de sa face 11 normalement destinée à former une interface avec un véhicule lanceur, ce satellite 10 est pourvu de moyens d'ancrage à unité externe 20. L'unité externe 20 comporte à cet effet des moyens d'ancrage coopérants. Ces moyens d'ancrage, qui ne sont pas représentés sur la figure 1, peuvent être de tout type habituellement mis en oeuvre dans le domaine spatial. Il peut notamment s'agir de dispositifs pyrotechniques, de moyens d'accrochage de type magnétique ou électromagnétique, ou d'anneaux mécaniques, tels que le système dit « cup and cone », les boulons pyrotechniques ou les mécanismes de type « clamp-band » couramment mis en oeuvre au niveau des interfaces satellite - lanceur. De tels systèmes d'ancrage sont bien connus de l'homme du métier.

Les moyens d'ancrage de l'unité externe 20 au satellite 10 sont en particulier configurés pour réaliser, outre une connexion mécanique, une connexion électrique et de communication entre ces deux éléments.

L'unité externe 20 comporte elle-même des moyens de fixation réversible, non visibles sur la figure 1, à un véhicule lanceur 61. Ce véhicule lanceur 61 est classique en lui-même et adapté pour réaliser, depuis la Terre, l'injection de l'ensemble formé par le satellite 10 et l'unité externe 20 dans l'orbite LEO.

Sur la figure 1, le satellite 10, l'unité externe 20 et le véhicule lanceur 61 sont représentés fixés les uns aux autres, dans une configuration de lancement dans l'espace.

L'unité externe 20 comporte une cuve à ergols 21, adaptée pour recevoir un volume 22 d'ergols sous forme de gaz, par exemple de xénon.

Elle comporte en outre des moyens d'amarrage réversible au véhicule de transfert 30, aptes à coopérer avec des moyens d'amarrage coopérants portés par ce dernier, et disposés de préférence au niveau d'une face de l'unité externe 20 opposée à la face au niveau de laquelle sont disposés les moyens d'ancrage au satellite 10.

Sur la figure 2, sont représentés de manière schématique le satellite 10 fixé à l'unité externe 20, elle-même fixée au véhicule de transfert 30, dans une configuration dite de transfert.

Les moyens d'amarrage coopérants de l'unité externe 20 et du véhicule de transfert 30 peuvent être de tout type connu en lui-même de l'homme du métier, permettant un amarrage réversible. Ces moyens d'amarrage sont par exemple du type mécanique, magnétique ou électromagnétique. Ils comportent un premier moyen 23 disposé sur l'unité externe 20 et un deuxième moyen 33 disposé sur le véhicule spatial 30, aptes à coopérer pour assurer l'amarrage de manière réversible, et illustrés de manière schématique sur la figure 2.

Le véhicule de transfert 30 comporte des moyens de rendez-vous avec l'unité externe 20, qui sont classiques en eux-mêmes. L'unité externe 20 comporte des moyens de rendez-vous passifs coopérants, également classiques en eux-mêmes, et comportant par exemple une série de diodes électroluminescentes 24, dont le signal est utilisé par le véhicule spatial 30 pour réaliser les manoeuvres d'approche et d'accostage.

Le véhicule de transfert 30 constitue un véhicule spatial autonome. Il comporte notamment un module de propulsion électrique 37, un circuit fluidique 39 d'alimentation en ergols de ce module de propulsion 37, des moyens de communication, notamment avec un dispositif de commande 50 déporté, en particulier au sol, des moyens de manoeuvre, etc. Il peut également comporter un réservoir à ergols 35.

Outre des moyens de connexion électromagnétique, les moyens d'amarrage du véhicule de transfert 30 et de l'unité externe 20 comportent également des moyens de connexion électrique et de communication. En particulier, l'unité externe 20 est configurée de sorte à constituer une interface entre le véhicule spatial 30 et le satellite 10, pour permettre la transmission de signaux de l'un à l'autre. En outre, les moyens d'ancrage de l'unité externe 20 au satellite 10 sont asservis aux moyens de connexion électrique entre l'unité externe 20 et le véhicule de transfert 30, si bien que la libération du satellite 10 peut être commandée depuis le véhicule de transfert 30.

Les moyens d'amarrage du véhicule de transfert 30 et de l'unité externe 20 comportent également des moyens de connexion fluidique l'un à l'autre, plus précisément entre la cuve 21 de l'unité externe 20 et le circuit fluidique 39 d'alimentation en ergols du module de propulsion 37 du véhicule de transfert 30.

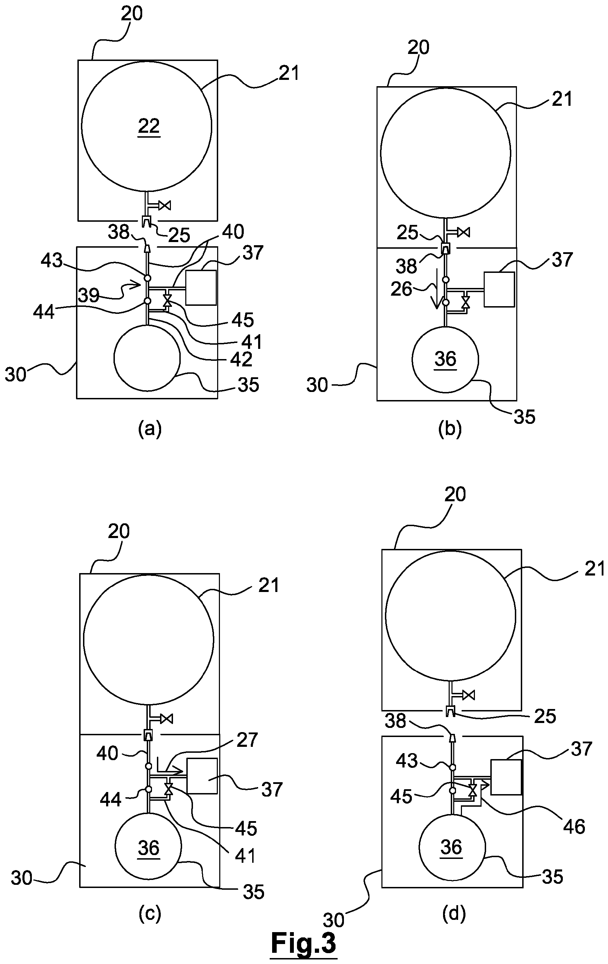

Ces moyens de connexion fluidiques, ainsi que le circuit fluidique 39 du véhicule de transfert 30, sont illustrés de manière schématique sur la figure 3. Sur cette figure, sont également illustrées les différentes configurations de circulation de fluide depuis l'unité externe 20, et au sein du véhicule de transfert 30.

La cuve à ergols 21 de l'unité externe 20 est dimensionnée pour contenir un volume d'ergols 22 adapté à l'alimentation du module de propulsion électrique 37 du véhicule spatial 30 pour la réalisation des phases suivantes : transfert de l'assemblage constitué par le véhicule de transfert 30, l'unité externe 20 et le satellite 10, de l'orbite d'injection LEO à l'orbite de mission GEO du satellite ; transfert de l'assemblage constitué par le véhicule de transfert 30 et l'unité externe 20 de cette orbite de mission GEO à une orbite cimetière pour l'unité externe 20 ; retour du véhicule de transfert 30 à une orbite d'attente proche de l'orbite initiale ; maintien du véhicule de transfert 30 dans l'orbite d'attente ; transfert du véhicule de transfert 30 jusqu'à l'orbite initiale, pour la prise en charge d'un nouveau satellite dont la mise à poste doit être réalisée.

Le réservoir à ergols 35 du véhicule de transfert 30 est quant à lui dimensionné pour contenir un volume d'ergols 36 adapté à l'alimentation du module de propulsion électrique 37 du véhicule de transfert 30 pour la réalisation des phases suivantes : retour du véhicule de transfert 30, depuis l'orbite cimetière de l'unité externe 20, à une orbite d'attente proche de l'orbite initiale ; maintien du véhicule de transfert 30 dans l'orbite d'attente ; transfert du véhicule de transfert 30 dans l'orbite initiale, pour la prise en charge d'un nouveau satellite dont la mise à poste doit être réalisée.

Dans une configuration initiale, illustrée en (a) sur la figure 3, la cuve à ergols 21 de l'unité externe 20 est remplie d'ergols, et le réservoir à ergols 35 du véhicule de transfert est sensiblement vide. Cette configuration correspond à une phase de rendez-vous, dans l'orbite initiale, du véhicule de transfert 30 et de l'unité externe 20.

L'unité externe 20 comporte des moyens 25 de connexion fluidique de la cuve à ergols 21 avec le véhicule de transfert 30. Le véhicule de transfert 30 comporte des moyens coopérants 38 de connexion fluidique de l'unité externe 20 avec le circuit fluidique 39 d'alimentation en ergols du module de propulsion électrique 37.

Ce circuit fluidique 39 comporte une branche dite d'alimentation 40, reliant les moyens de connexion fluidique 38 et le module de propulsion électrique 37. Sur la figure 3, cette branche forme un angle droit.

Le circuit fluidique 39 comporte en outre une branche de dérivation 41, qui s'étend entre deux points de la branche d'alimentation 40. Le réservoir à ergols 35 est relié à cette branche de dérivation 41 par une canalisation 42.

Sur le circuit fluidique 39 sont montés deux clapets anti-retour qui autorisent la circulation de fluide depuis les moyens de connexion fluidique 38 vers le réservoir 35, mais qui interdisent toute circulation de fluide en sens inverse. Un premier clapet anti-retour 43 est monté sur la branche d'alimentation 40, en amont de la branche de dérivation 41 dans le sens de circulation du fluide en provenance des moyens de connexion fluidique 38. Un deuxième clapet anti-retour 44 est monté sur la branche de dérivation 41, en amont du point de branchement de la canalisation 42, dans le sens de circulation du fluide en provenance des moyens de connexion fluidique 38.

Le circuit fluidique 39 comporte également une vanne 45, actionnable en ouverture et en fermeture, notamment une pyrovanne, montée sur la branche de dérivation 41, de sorte à être apte à obturer cette dernière en position de fermeture, en aval du point de branchement de la canalisation 42, dans le sens de circulation du fluide en provenance du réservoir 35 vers le module de propulsion électrique 37. Le véhicule de transfert comporte des moyens de commande de l'ouverture et de la fermeture de la vanne 45.

Dans la configuration initiale illustrée en (a) sur la figure 3, la vanne 45 se trouve en position fermée.

Lors de l'amarrage du véhicule de transfert 30 à l'unité externe 20, comme illustré en (b) sur la figure 3, la connexion fluidique s'établit entre les moyens de connexion fluidique 25 de l'unité externe 20 et les moyens de connexion fluidique 38 du véhicule de transfert 30. La cuve 21 et le réservoir 35 se trouvent alors en connexion fluidique l'un avec l'autre. Par un phénomène d'équilibrage spontané de leurs pressions internes, et en raison de la différence importante de volumes internes de la cuve 21 d'une part, et du réservoir 35 d'autre part, il se produit alors un transvasement d'ergols de la cuve 21 vers le réservoir 35, comme indiqué en 26 sur la figure, menant à un remplissage du réservoir par un volume d'ergols 36 correspondant sensiblement à sa capacité maximale. La pression après le transvasement reste élevée dans la cuve 21. Une telle configuration de l'unité externe 20 et du véhicule de transfert 30 permet avantageusement de s'affranchir de la mise en oeuvre de dispositifs onéreux, lourds et complexes, tels que des pompes, pour réaliser le transfert d'ergols de la cuve 21 de l'unité externe 20 jusqu'au réservoir 35 du véhicule de transfert 30.

Dans des modes de réalisation particuliers de l'invention, le véhicule spatial 30 comporte en outre un système de propulsion à gaz froid, et un réservoir spécifique différent du réservoir 35 utilisé par la module de propulsion électrique 37, dit réservoir principal (éléments non représentés sur les figures). Ce réservoir spécifique est avantageusement disposé dans le véhicule spatial 30 de sorte à être alimenté avant le réservoir principal 35, afin d'y maximiser la pression et de ce fait de maximiser l'impulsion spécifique du système de propulsion à gaz froid, ce qui s'avère avantageux par rapport à l'utilisation d'un réservoir commun dans les cas où la propulsion à gaz froid est mise en oeuvre principalement pendant la phase de rendez-vous.

Lors de la phase de transfert de l'orbite LEO dans l'orbite GEO, le module de propulsion électrique 37 du véhicule de transfert 30 puise dans les réserves d'ergols qui lui sont disponibles. La vanne 45 étant toujours fermée, et le clapet anti-retour 44 étant opérant, son approvisionnement est réalisé directement et uniquement depuis la cuve 21 de l'unité externe 20, via la branche d'alimentation 40, comme indiqué en 27, en (c) sur la figure 3. La quantité d'ergols contenue dans la cuve 21 lui permet de réaliser le transfert jusqu'à l'orbite GEO, puis, de là, jusqu'à une orbite cimetière de l'unité externe 20.

Lorsque l'unité externe 20 est larguée par le véhicule de transfert 30, comme illustré en (d) sur la figure 3, les moyens de connexion fluidique 25 et 38 sont désolidarisés l'un de l'autre. Le réservoir 35 contient un volume sensiblement maximal d'ergols 36. Afin d'assurer l'alimentation en ergols du module de propulsion électrique 37, la vanne 45 est actionnée en ouverture, de sorte à permettre la circulation de fluide depuis le réservoir 35 en direction du module de propulsion électrique 37, comme indiqué en 46 sur la figure 3. Le clapet anti-retour 43 empêche tout retour de fluide vers les moyens de connexion fluidique 38.

Le module de propulsion électrique 37 du véhicule de transfert 30 comporte une pluralité de propulseurs, choisis pour présenter une forte poussée. Ces propulseurs présentent par exemple une puissance de 20 kW chacun.

Le module de propulsion 37 est préférentiellement configuré de sorte que ces propulseurs à forte poussée soient situés au niveau d'une face du véhicule de transfert 30 distincte de la face comportant les moyens d'amarrage à l'unité externe 20, par exemple à l'opposé de cette face.

Ces propulseurs peuvent être à poussée et impulsion spécifique variables, permettant un fonctionnement à forte poussée / faible impulsion spécifique ou à faible poussée / forte impulsion spécifique, tels que des propulseurs relevant de la technologie Elwing.

Dans des variantes de l'invention, les propulseurs à forte poussée et faible impulsion spécifique sont associés à des propulseurs à faible poussée et forte impulsion spécifique, pour la mise en oeuvre des opérations de déplacement du véhicule de transfert 30 après séparation d'avec le satellite 10. Ces propulseurs supplémentaires peuvent être disposés dans une même zone du véhicule de transfert 30 que les propulseurs à forte poussée 47, ou de préférence dans une zone distincte.

Le système selon l'invention comporte en outre un dispositif de commande à distance 50, configuré pour piloter les différentes phases mises en oeuvre par le véhicule de transfert 30. A cet effet, le dispositif de commande 50 et le véhicule de transfert 30 comportent chacun des moyens conventionnels de communication à distance.

Le dispositif de commande 50 est adapté à déterminer des signaux de commande qui sont envoyés au véhicule de transfert 30. Ces signaux de commande sont par exemple déterminés en fonction de signaux de mesure reçus du véhicule de transfert 30, qui sont déterminés par différents capteurs (gyroscope, senseur stellaire, etc.) de ce dernier.

Le dispositif de commande 50 comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé de commande du véhicule de transfert 30. Dans une variante, le dispositif de commande 50 comporte également un ou des circuits logiques programmables, de type FPGA, PLD, etc., et/ou circuits intégrés spécialisés (ASIC) adaptés à mettre en oeuvre tout ou partie desdites étapes du procédé de commande. En d'autres termes, le dispositif de commande 50 comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé de commande décrit ci-après.

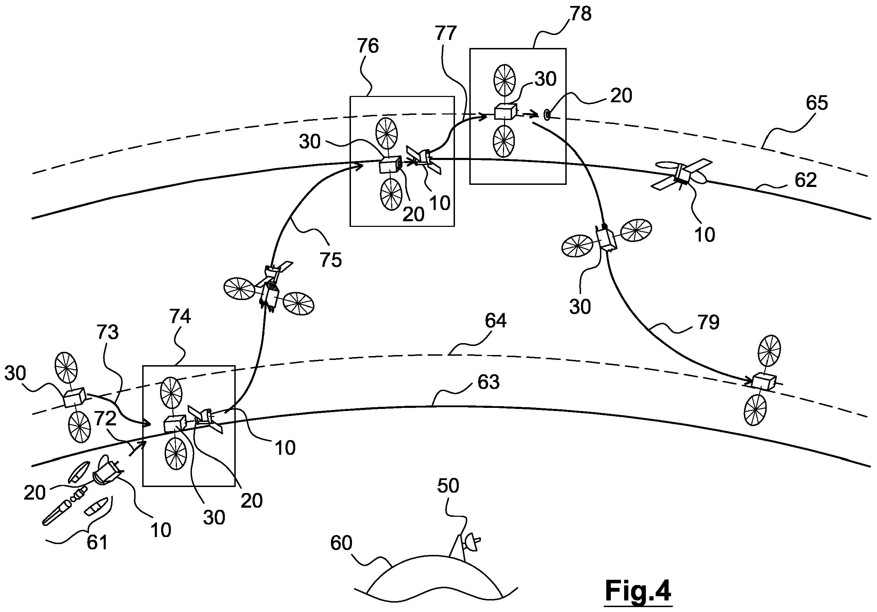

Les différentes étapes d'un procédé de mise à poste du satellite 10 dans son orbite de mission GEO 62, depuis la surface terrestre 60, au moyen du système décrit ci-avant, sont illustrées sur la figure 4.

Dans une première étape du procédé, mise en oeuvre sur la surface terrestre 60, le satellite 10, comportant des moyens de propulsion dimensionnés uniquement pour être aptes à assurer son maintien à poste sur son orbite de mission, par exemple géostationnaire, est fixé à l'unité externe 20, par leurs moyens d'ancrage coopérants. Cet ancrage réalise une connexion mécanique, électrique et de communication entre ces deux éléments. La cuve à ergols 21 est remplie d'un volume 22 d'ergols gazeux, par exemple de Xénon, et fixée au véhicule lanceur 61, représenté en éclaté sur la figure 4.

Dans une étape suivante, l'ensemble comprenant le satellite 10 et l'unité externe 20 est lancé depuis la surface terrestre 60 et injecté, par le véhicule lanceur 61, dans l'orbite LEO 63, comme illustré en 72 sur la figure 4.

Le véhicule de transfert 30 a été préalablement placé en orbite, de manière conventionnelle, dans une orbite terrestre dite d'attente 64, proche de l'orbite LEO 63. Son maintien orbital dans cette orbite est assuré par son module de propulsion 37, et une faible quantité d'ergols contenue dans son réservoir à ergols 35.

Après l'injection du satellite 10 et de l'unité externe 20 dans l'orbite LEO 63, le procédé de mise à poste du satellite prévoit la commande du véhicule de transfert 30, par le dispositif de commande à distance 50 situé par exemple sur la surface terrestre 60, pour la réalisation des phases successives suivantes.

Dans une première phase, indiquée en 73 sur la figure 4, le véhicule de transfert réalise un changement d'orbite, pour se placer dans l'orbite LEO 63. Il y met en oeuvre les opérations de rendez-vous avec l'unité externe 20, de manière conventionnelle en soi. L'unité externe 20 se place à cet effet dans la position orbitale adéquate.

Dans une deuxième phase 74, toujours dans l'orbite LEO 63, le véhicule spatial 30 s'amarre à l'unité externe 20, par les moyens d'amarrage coopérants portés respectivement par le véhicule spatial 30 et l'unité externe 20. Cet amarrage réalise, entre ces deux éléments, une connexion fluidique, pneumatique, électrique et de communication. En particulier, il réalise une connexion fluidique entre la cuve à ergols 21 de l'unité externe 20 et le circuit fluidique 39 d'alimentation en ergols du module de propulsion électrique 37 du véhicule de transfert 30.

Après la réalisation de cette connexion fluidique, un transfert d'ergols se réalise par équilibrage spontané des pressions entre la cuve 21 de l'unité externe 20 et le réservoir 35 du véhicule de transfert 30. Une fois le transfert terminé, il est mis en oeuvre la phase suivante 75.

Cette phase 75 consiste en un transfert de l'assemblage formé par le véhicule de transfert 30, l'unité externe 20 et le satellite 10, de l'orbite LEO 63 à l'orbite de mission GEO 62. Ce transfert est réalisé par propulsion au moyen du module de propulsion 37 du véhicule de transfert 30, alimenté en ergols directement depuis la cuve 21 de l'unité externe 20. Il est rapide, grâce aux caractéristiques avantageuses du module de propulsion électrique 37. Le temps d'exposition du satellite 10 aux radiations des ceintures de Van Allen est par conséquent réduit.

Le véhicule de transfert 30 commande alors la libération des moyens d'ancrage de l'unité externe 20 au satellite 10, pour l'injection de ce dernier dans l'orbite GEO 62.

Dans une variante de l'invention, c'est l'ensemble formé par l'unité externe 20 et le satellite 10, solidaires l'un de l'autre, qui est injecté dans l'orbite GEO 62 par le véhicule de transfert 30, qui poursuit ensuite seul sa mission.

Durant toutes ces phases, le satellite 10 est resté passif, ses moyens de télécommunication restant notamment repliés. Son contrôle depuis le dispositif de commande 50 a cependant été permis via le véhicule de transfert 30, et l'unité externe 20 formant une interface de transmission des signaux entre ce dernier et le satellite 10. Le satellite 10 peut notamment être configuré de telle sorte que la libération de ses moyens d'ancrage à l'unité externe 20 déclenche automatiquement sa mise en service.

Dans certains cas, il peut être avantageux au cours d'une ou plusieurs de ces phases, de déployer les panneaux solaires du satellite, afin d'augmenter la puissance disponible pour le véhicule de transfert 30. Le satellite n'est alors plus passif. Dans des modes de réalisation particuliers de l'invention, le véhicule spatial 30, l'unité externe 20 et le satellite 10 sont pourvus à cet effet de moyens de transmission de puissance entre le satellite 10 et le véhicule spatial 30.

Depuis l'orbite GEO 62, la phase suivante 77 peut consister en un transfert du véhicule de transfert 30, toujours amarré à l'unité externe 20, jusqu'à une orbite cimetière 65. Dans cette orbite cimetière 65, le véhicule de transfert 30 est commandé pour libérer les moyens d'amarrage à l'unité externe 20, comme indiqué en 78 sur la figure 4, de sorte à y réaliser le largage de l'unité externe 20. L'orbite cimetière 65 peut être située au-dessus ou en-dessous de l'orbite GEO 62. Lorsque l'orbite cimetière 65 est localisée sous l'arc géostationnaire, cette opération ce nécessite pas de Delta-V supplémentaire.

Durant toutes ces phases de transfert depuis l'orbite LEO 63, l'alimentation en ergols du module de propulsion électrique 37 du véhicule de transfert 30 a été réalisée directement depuis la cuve à ergols 21 de l'unité externe 20. Après ou au moment de la séparation de l'unité externe 20 et du véhicule de transfert 30, la vanne 45 de ce dernier est ouverte, de sorte à établir une connexion fluidique entre le réservoir à ergols 35 et le module de propulsion électrique 37 du véhicule de transfert 30. Ce dernier devient alors entièrement autonome, et commence à utiliser sa propre réserve d'ergols, constituée juste après la mise en oeuvre de la phase 74 d'amarrage à l'unité externe 20.

Dans une phase ultérieure 79, le véhicule de transfert 30 est ensuite ramené dans son orbite d'attente 64. Ce transfert d'orbite est préférentiellement réalisé avec une faible poussée, de sorte à être peu consommateur d'ergols. Le véhicule de transfert 30 est maintenu dans cette orbite d'attente 64 jusqu'à sa mission suivante.

Dans des variantes de l'invention, moins avantageuses que celles décrites ci-avant, en termes de complexité des équipements du véhicule de transfert 30, après la phase 76 de libération du satellite 10 dans l'orbite de mission 62, le véhicule de transfert 30 est directement ramené dans l'orbite d'attente 64, toujours amarré à l'unité externe 20. Dans sa mission suivante, il s'amarre à un nouvel ensemble formé par un satellite à mettre à poste fixé une unité externe d'alimentation véhiculant sa propre réserve d'ergols. Après la mise à poste de ce nouveau satellite dans son orbite de mission, le véhicule de transfert 30 rejoint l'orbite cimetière 65, pour y larguer l'unité externe 20, vide d'ergols, de la mission précédente. Le véhicule de transfert est ainsi toujours amarré à une unité externe, qui l'alimente en ergols pour toutes ses manoeuvres. Dans un tel contexte, le véhicule de transfert 30 peut ne pas comporter de réservoir à ergols propre 35.

A titre d'exemple, le dimensionnement du système selon l'invention et les paramètres de transfert d'orbite peuvent être les suivants.

Le Delta-V pour le transfert de l'orbite LEO 63 à l'orbite GEO 62 est de 4549 m/s, et le Delta-V pour le transfert de l'orbite GEO 62 à l'orbite cimetière 65 est de 11 m/s.

Les masses sèches sont de 3000 kg pour le véhicule de transfert 30, 2500 kg pour le satellite 10 et 100 kg pour l'unité externe d'alimentation 20. Le véhicule de transfert 30 utilise 5 propulseurs de 20 kW chacun, fournissant une poussée totale de 7,2 N en technologie à effet Hall, avec une impulsion spécifique de 2000 s, et 5 propulseurs de 20 kW avec une poussée totale de 3,2 N en technologie ionique à grille, avec une impulsion spécifique de 4500 s. Pour permettre la redondance en cas de panne, et compenser l'attrition des moteurs, un total de 10 propulseurs pour chaque technologie a été pris en compte dans le bilan de masse.

L'ergol utilisé est le xénon. Le volume utile de la cuve à ergols 21 de l'unité externe 20 est de 821 I. La pression initiale dans cette cuve à ergols remplie d'ergols est de 250 bars.

Le volume utile du réservoir à ergols 35 du véhicule de transfert 30 est de 1741. I. La pression initiale dans ce réservoir, avant amarrage à l'unité externe 20, est de 10 bars.

Après amarrage et équilibrage des pressions, la pression dans chacun de la cuve 21 et du réservoir 35 est de 208 bars.

L'impulsion spécifique durant la phase de transfert du satellite de l'orbite LEO 63 à l'orbite GEO 62 est de 2000 s, et l'impulsion spécifique durant les phases de transfert de l'orbite GEO 62 à l'orbite cimetière 65 et le retour sur l'orbite d'attente 64 est de 4500 s.

La masse d'ergols utilisée pour mettre en oeuvre le transfert du satellite 10 jusqu'à l'orbite GEO 62, puis le transfert du véhicule de transfert 30 et de l'unité externe 20 jusqu'à l'orbite cimetière 65, est de 1542 kg.

La masse résiduelle d'ergols dans l'unité externe 20 après son largage dans l'orbite cimetière 65 est de 78 kg.

La masse d'ergols utilisée pour le retour du véhicule de transfert 30 dans son orbite d'attente 64 est de 327 kg.

La masse résiduelle d'ergols dans le réservoir 35 du véhicule de transfert 30 après son retour dans l'orbite d'attente est de 17 kg.

En comparaison, pour une solution de lancement classique, consistant à lancer le satellite sur une orbite de transfert GTO, pour la même masse sèche que dans cet exemple de mise en oeuvre du procédé selon l'invention, la masse lancée sur l'orbite GTO serait de 3950 kg avec un système de propulsion chimique (impulsion spécifique de 320 s) et de 2700 kg avec un système de propulsion électrique (impulsion spécifique de 1750 s).

Le gain apporté par la présente invention diffère dans les deux cas. Dans le premier cas, il se traduit essentiellement par un gain sur la capacité du véhicule lanceur, puisque ce dernier doit fournir 150 GJ pour le cas avec transfert conforme à l'invention, contre 215 GJ pour un transfert chimique classique. Dans le deuxième cas, il y a un gain significatif sur la durée de transfert (environ 6 mois par la solution de lancement classique à transfert électrique, contre environ 2 mois selon la présente invention), et par voie de conséquence sur les coûts d'opération et les frais financiers d'amortissement du satellite, ainsi que sur la dose de radiation à laquelle est exposé le satellite (cette réduction représente selon les cas entre 30 et 80% de la dose absorbée).

## Revendications

1. Procédé de transfert d'un satellite (10) d'une orbite initiale (63) dans une orbite de mission (62) dudit satellite (10) autour d'un corps céleste (60), comprenant:
- dans ladite orbite initiale (63), une étape d'amarrage (74) :
• d'un véhicule spatial (30) comportant un module de propulsion (37) électrique et un circuit fluidique (39) d'alimentation en ergols dudit module de propulsion (37),
• à une unité externe (20) d'alimentation en ergols, comportant une cuve à ergols (21) contenant une réserve d'ergols (22) et ancrée audit satellite par des moyens d'ancrage coopérants portés respectivement par ladite unité externe (20) et par ledit satellite (10),
ledit véhicule spatial (30) et ladite unité externe (20) comportant des moyens d'amarrage réversible l'un à l'autre coopérants, comportant des moyens (38, 25) de connexion fluidique de ladite cuve à ergols (21) avec ledit circuit fluidique (39) de telle sorte que ladite étape d'amarrage réalise une connexion fluidique entre ledit circuit fluidique (39) du véhicule spatial (30) et ladite cuve à ergols (21) de l'unité externe (20), permettant l'alimentation en ergols dudit module de propulsion (37) depuis ladite unité externe (20) ;
- une étape de transfert (75) dudit véhicule spatial (30) ainsi amarré à un ensemble comportant ladite unité externe (20) ancrée audit satellite (10), jusqu'à ladite orbite de mission (62), au moyen du module de propulsion électrique (37) dudit véhicule spatial (30) alimenté en ergols depuis la cuve à ergols (21) de l'unité externe (20),
- et une étape de libération (76) dudit satellite (10) dans ladite orbite de mission (62).

2. Procédé de transfert selon la revendication 1, selon lequel lors de l'étape de transfert, le véhicule spatial (30) est alimenté en ergols directement depuis la cuve à ergols (21) de l'unité externe (20).

3. Procédé de transfert selon l'une quelconque des revendications 1 à 2, comprenant une étape préalable de rendez-vous (73) dans l'orbite initiale (63) dudit véhicule spatial (30) avec ledit ensemble.

4. Procédé selon l'une quelconque des revendications 1 à 3, selon lequel les moyens d'ancrage de l'unité externe (20) au satellite (10) sont du type libérables sur commande pour provoquer la séparation de ladite unité externe (20) et dudit satellite (10), et l'étape de libération (76) dudit satellite (10) dans l'orbite de mission (62) est réalisée par commande de la libération des moyens d'ancrage de ladite unité externe (20) audit satellite (10).

5. Procédé selon l'une quelconque des revendications 1 à 4, selon lequel le véhicule spatial (30) comporte un réservoir à ergols (35) en connexion fluidique avec le circuit fluidique (39), et ledit procédé comprend, entre l'étape d'amarrage (74) et l'étape de transfert (75), une étape de transvasement d'ergols de la cuve à ergols (21) de l'unité externe (20) dans ledit réservoir à ergols (35) du véhicule spatial (30).

6. Procédé selon la revendication 5, selon lequel les ergols contenus dans la cuve à ergols (21) de l'unité externe (20) sont de type gazeux, et l'étape de transvasement d'ergols de la cuve à ergols (21) de l'unité externe (20) dans le réservoir à ergols (35) du véhicule spatial (30) est réalisée par connexion fluidique de ladite cuve à ergols (21) et dudit réservoir à ergols (35), de sorte à permettre ledit transvasement d'ergols par équilibrage des pressions entre ladite cuve à ergols (21) et ledit réservoir à ergols (35).

7. Procédé selon l'une quelconque des revendications 1 à 6, comprenant, après l'étape (76) de libération du satellite (10) dans l'orbite de mission (62), une étape (79) de déplacement dudit véhicule spatial (30) jusqu'à une orbite dite d'attente (64).

8. Procédé de commande à distance d'un véhicule spatial (30) pour la mise en oeuvre des étapes d'un procédé de transfert selon l'une quelconque des revendications 1 à 7, ledit véhicule spatial (30) comportant un module de propulsion (37) électrique, un circuit fluidique (39) d'alimentation en ergols dudit module de propulsion (37), et des moyens d'amarrage réversible à une unité externe (20) d'alimentation en ergols, comportant des moyens (38) de connexion fluidique de ladite unité externe (20) avec ledit circuit fluidique (39) permettant l'alimentation en ergols dudit module de propulsion (37) depuis ladite unité externe (20),
selon lequel ledit véhicule spatial (30) est commandé à distance par un dispositif de commande (50), des signaux de commande étant successivement déterminés et envoyés audit véhicule spatial (30) par ledit dispositif de commande (50) pour la réalisation desdites étapes.

9. Véhicule spatial (30) pour la mise en oeuvre d'un procédé de transfert selon l'une quelconque des revendications 1 à 7, comportant :
- un module de propulsion (37) électrique,
- un circuit fluidique (39) d'alimentation en ergols dudit module de propulsion (37),
- et un réservoir à ergols (35), en connexion fluidique avec ledit circuit fluidique d'alimentation (39),
- des moyens d'amarrage réversible dudit véhicule spatial (30) à une unité externe (20) d'alimentation en ergols, comportant des moyens (38) de connexion fluidique dudit circuit fluidique (39) avec ladite unité externe (20), ledit circuit fluidique (39) étant configuré pour permettre une connexion fluidique entre ledit réservoir à ergols (35) et ladite unité externe (20), **caractérisé en ce que** ledit circuit fluidique est configuré pour permettre
- l'alimentation directe en ergols dudit module de propulsion (37) depuis ladite unité externe (20), sans passer par le réservoir à ergols (35) du véhicule spatial (30).

10. Véhicule spatial (30) selon la revendication 9, dans lequel le circuit fluidique (39) comporte des moyens d'obturation (44, 45) mobiles entre une position de fermeture interdisant la circulation de fluide dans ledit circuit fluidique entre le réservoir à ergols (35) et le module de propulsion (37), et une position d'ouverture autorisant ladite circulation de fluide, et des moyens d'actionnement desdits moyens d'obturation (44, 45) entre ladite position de fermeture et ladite position d'ouverture.

11. Véhicule spatial (30) selon l'une quelconque des revendications 9 à 10, dans lequel le circuit fluidique (39) comporte un organe d'obturation (43) autorisant la circulation de fluide depuis les moyens de connexion fluidique (38) vers le réservoir à ergols (35), et interdisant le passage de fluide depuis ledit réservoir à ergols (35) vers lesdits moyens de connexion fluidique (38).

12. Véhicule spatial (30) selon l'une quelconque des revendications 9 à 11, comportant des moyens de rendez-vous avec l'unité externe (20) localisée sur l'orbite initiale (63).

13. Véhicule spatial (30) selon l'une quelconque des revendications 9 à 12, comportant des moyens de connexion électrique avec l'unité externe (20).

14. Unité externe (20) pour la mise en oeuvre d'un procédé de transfert selon l'une quelconque des revendications 1 à 7, comportant une cuve à ergols (21), comportant :
- des moyens d'ancrage à un satellite (10), disposés au niveau d'une première zone de ladite unité externe (20),
- et des moyens d'amarrage aptes à coopérer avec des moyens d'amarrage réversible d'un véhicule spatial (30), disposés au niveau d'une deuxième zone de ladite unité externe (20) et comportant des moyens (25) de connexion fluidique de ladite cuve à ergols (21) avec ledit véhicule spatial (30).

15. Unité externe (20) selon la revendication 14, dans laquelle les moyens d'ancrage au satellite (10) sont du type libérables sur commande pour provoquer la séparation de ladite unité externe (20) et dudit satellite (10).

16. Unité externe (20) selon l'une quelconque des revendications 14 à 15, comportant des moyens de connexion électrique avec le véhicule spatial (30).

17. Unité externe (20) selon les revendications 15 et 16, dans laquelle la libération des moyens d'ancrage au satellite (10) est asservie aux moyens de connexion électrique avec le véhicule spatial (30).

18. Unité externe (20) selon l'une quelconque des revendications 14 à 17, comportant des moyens d'ancrage simultané à une pluralité de satellites (10).

19. Ensemble comportant :
- une unité externe (20) selon l'une quelconque des revendications 14 à 18, dans laquelle la cuve à ergols (21) contient des ergols pour propulsion électrique,
- et un satellite (10) comportant des moyens d'ancrage aptes à coopérer avec les moyens d'ancrage de ladite unité externe (20),
ladite unité externe (20) étant fixée de manière réversible audit satellite (10) par coopération des moyens d'ancrage du satellite (10) et des moyens d'ancrage de l'unité externe (20).

20. Ensemble selon la revendication 19, comportant, l'unité externe (20) étant conforme à la revendication 18, une pluralité de satellites (10) comportant chacun des moyens d'ancrage aptes à coopérer avec les moyens d'ancrage de ladite unité externe (20), ladite unité externe (20) étant fixée de manière réversible à chacun desdits satellites (10) par coopération des moyens d'ancrage du satellite (10) et des moyens d'ancrage de l'unité externe (20).

21. Système pour le transfert d'un satellite (10) d'une orbite initiale (63) dans une orbite de mission (62) autour d'un corps céleste (60), comportant :
- un véhicule spatial (30) selon l'une quelconque des revendications 9 à 13,
- et une unité externe (20) selon l'une quelconque des revendications 14 à 18.

22. Procédé de mise à poste d'un satellite (10) sur son orbite de mission (62) autour d'un corps céleste (60), **caractérisé en ce qu'**il comprend des étapes de :
- fixation audit satellite (10) d'une unité externe (20) selon l'une quelconque des revendications 14 à 18, et introduction d'ergols pour propulsion électrique dans la cuve à ergols (21) de ladite unité externe (20), de sorte à former un ensemble selon l'une quelconque des revendications 19 à 20,
- lancement (71) dudit ensemble dans l'espace, et injection (72) dudit ensemble dans une orbite initiale (63) autour dudit corps céleste (60),
- et mise en oeuvre d'un procédé de transfert selon l'une quelconque des revendications 1 à 7 pour réaliser le transfert dudit ensemble de ladite orbite initiale (63) dans ladite orbite de mission (62).

## Patentansprüche

1. Verfahren zur Übertragung eines Satelliten (10) aus einer ersten Umlaufbahn (63) in eine Missionsumlaufbahn (62) des Satelliten (10) um einen Himmelskörper (60), umfassend:
- in der ersten Umlaufbahn (63) einen Schritt des Andockens (74):
• eines Raumfahrzeugs (30), umfassend ein Elektroantriebsmodul (37) und einen Fluidkreis (39) zur Treibstoffversorgung des Antriebsmoduls (37),
• an eine externe Treibstoffversorgungseinheit (20), umfassend einen Treibstoffbehälter (21), der einen Treibstoffvorrat (22) enthält und an dem Satelliten durch zusammenwirkende Verankerungsmittel verankert wird, die jeweils von der externen Einheit (20) und von dem Satelliten (10) getragen werden,
wobei das Raumfahrzeug (30) und die externe Einheit (20) zusammenwirkende Mittel zum reversiblen Aneinander-Andocken aufweisen, die Mittel (38, 25) zur Fluidverbindung des Treibstoffbehälters (21) mit dem Fluidkreis (39) derart aufweisen, dass der Schritt des Andockens eine Fluidverbindung zwischen dem Fluidkreis (39) des Raumfahrzeugs (30) und dem Treibstoffbehälter (21) der externen Einheit (20) erstellt, die die Treibstoffversorgung des Antriebsmoduls (37) von der externen Einheit (20) ermöglicht;
- einen Schritt des Übertragens (75) des Raumfahrzeugs (30), das auf diese Weise an eine Anordnung angedockt wird, die die externe Einheit (20) aufweist, die an dem Satelliten (10) verankert wird, bis zu der Missionsumlaufbahn (62) mittels des Elektroantriebsmoduls (37) des Raumfahrzeugs (30), das mit Treibstoff von dem Treibstoffbehälter (21) der externen Einheit (20) versorgt wird,
- und einen Schritt des Freigebens (76) des Satelliten (10) in die Missionsumlaufbahn (62).

2. Verfahren zur Übertragung nach Anspruch 1, wobei das Raumfahrzeug (30) während des Schrittes des Übertragens direkt von dem Treibstoffbehälter (21) der externen Einheit (20) mit Treibstoff versorgt wird.

3. Verfahren zur Übertragung nach einem der Ansprüche 1 bis 2, umfassend einen vorherigen Schritt des Begegnens (73) auf der ersten Umlaufbahn (63) des Raumfahrzeugs (30) mit der Anordnung.

4. Verfahren nach einem der Ansprüche 1 bis 3, wobei die Verankerungsmittel der externen Einheit (20) an dem Satelliten (10) vom auf Befehl lösbaren Typ sind, um das Trennen der externen Einheit (20) und des Satelliten (10) zu bewirken, und der Schritt des Freigebens (76) des Satelliten (10) in die Missionsumlaufbahn (62) durch Befehl zum Lösen der Verankerungsmittel der externen Einheit (20) an dem Satelliten (10) durchgeführt wird.

5. Verfahren nach einem der Ansprüche 1 bis 4, wobei das Raumfahrzeug (30) einen Treibstofftank (35) in Fluidverbindung mit dem Fluidkreis (39) aufweist, und das Verfahren zwischen dem Schritt des Andockens (74) und dem Schritt des Übertragens (75) einen Schritt des Umfüllens von Treibstoffen von dem Treibstoffbehälter (21) der externen Einheit (20) in den Treibstofftank (35) des Raumfahrzeugs (30) aufweist.

6. Verfahren nach Anspruch 5, wobei die Treibstoffe, die in dem Treibstoffbehälter (21) der externen Einheit (20) enthalten sind, vom Typ der gasförmigen Treibstoffe sind, und der Schritt des Umfüllens von Treibstoffen von dem Treibstoffbehälter (21) der externen Einheit (20) in den Treibstofftank (35) des Raumfahrzeugs (30) durch Fluidverbindung des Treibstoffbehälters (21) und des Treibstofftanks (35) derart durchgeführt wird, um das Umfüllen von Treibstoffen durch Ausgleichen der Drücke zwischen dem Treibstoffbehälter (21) und dem Treibstofftank (35) zu ermöglichen.

7. Verfahren nach einem der Ansprüche 1 bis 6, umfassend nach dem Schritt (76) des Freigebens des Satelliten (10) in die Missionsumlaufbahn (62) einen Schritt (79) des Bewegens des Raumfahrzeugs (30) bis zu einer Warteumlaufbahn (64).

8. Verfahren zum Fernsteuern eines Raumfahrzeugs (30) zum Umsetzen der Schritte eines Verfahrens zur Übertragung nach einem der Ansprüche 1 bis 7, wobei das Raumfahrzeug (30) ein Elektroantriebsmodul (37), einen Fluidkreis (39) zur Treibstoffversorgung des Antriebsmoduls (37) und Mittel zum reversiblen Andocken an eine externe Treibstoffversorgungseinheit (20) aufweist, umfassend Mittel (38) zur Fluidverbindung der externen Einheit (20) mit dem Fluidkreis (39), die die Treibstoffversorgung des Antriebsmoduls (37) von der externen Einheit (20) ermöglichen,
wobei das Raumfahrzeug (30) durch eine Steuervorrichtung (50) ferngesteuert wird, wobei Steuersignale nacheinander bestimmt und an das Raumfahrzeug (30) durch die Steuervorrichtung (50) zum Durchführen der Schritte gesendet werden.

9. Raumfahrzeug (30) zum Umsetzen eines Verfahrens zur Übertragung nach einem der Ansprüche 1 bis 7, umfassend:
- ein Elektroantriebsmodul (37),
- einen Fluidkreis (39) zur Treibstoffversorgung des Antriebsmoduls (37),
- und einen Treibstofftank (35) in Fluidverbindung mit dem Fluidkreis zur Versorgung (39),
- Mittel zum reversiblen Andocken des Raumfahrzeugs (30) an eine externe Treibstoffversorgungseinheit (20), umfassend Mittel (38) zur Fluidverbindung des Fluidkreises (39) mit der externen Einheit (20),
wobei der Fluidkreis (39) konfiguriert ist, um eine Fluidverbindung zwischen dem Treibstofftank (35) und der externen Einheit (20) zu ermöglichen, **dadurch gekennzeichnet, dass** der Fluidkreis konfiguriert ist, um die direkte Treibstoffversorgung des Antriebsmoduls (37) von der externen Einheit (20) ohne Umweg über den Treibstofftank (35) des Raumfahrzeugs (30) zu ermöglichen.

10. Raumfahrzeug (30) nach Anspruch 9, wobei der Fluidkreis (39) Verschlussmittel (44, 45), die zwischen einer Schließstellung, die das Strömen des Fluids in dem Fluidkreis zwischen dem Treibstofftank (35) und dem Antriebsmodul (37) verhindert, und einer Öffnungsstellung, die das Strömen des Fluids ermöglicht, beweglich sind, und Mittel zum Betätigen der Verschlussmittel (44, 45) zwischen der Schließstellung und der Öffnungsstellung aufweist.

11. Raumfahrzeug (30) nach einem der Ansprüche 9 bis 10, wobei der Fluidkreis (39) ein Verschlussorgan (43) aufweist, das das Strömen des Fluids von den Mitteln zur Fluidverbindung (38) zu dem Treibstofftank (35) ermöglicht und den Durchfluss des Fluids von dem Treibstofftank (35) zu den Mitteln zur Fluidverbindung (38) verhindert.

12. Raumfahrzeug (30) nach einem der Ansprüche 9 bis 11, umfassend Mittel zum Begegnen mit der externen Einheit (20), die in der ersten Umlaufbahn (63) lokalisiert ist.

13. Raumfahrzeug (30) nach einem der Ansprüche 9 bis 12, umfassend Mittel zum elektrischen Verbinden mit der externen Einheit (20).

14. Externe Einheit (20) zum Umsetzen eines Verfahrens zur Übertragung nach einem der Ansprüche 1 bis 7, umfassend einen Treibstoffbehälter (21), umfassend:
- Verankerungsmittel an einem Satelliten (10), die an einem ersten Bereich der externen Einheit (20) angeordnet sind,
- und Mittel zum Andocken, die geeignet sind, mit den Mitteln zum reversiblen Andocken eines Raumfahrzeugs (30) zusammenzuwirken, die an einem zweiten Bereich der externen Einheit (20) angeordnet sind, und Mittel (25) zur Fluidverbindung des Treibstoffbehälters (21) mit dem Raumfahrzeug (30) aufweisen.

15. Externe Einheit (20) nach Anspruch 14, wobei die Verankerungsmittel an dem Satelliten (10) vom auf Befehl lösbaren Typ sind, um das Trennen der externen Einheit (20) und des Satelliten (10) zu bewirken.

16. Externe Einheit (20) nach einem der Ansprüche 14 bis 15, umfassend Mittel zum elektrischen Verbinden mit dem Raumfahrzeug (30).

17. Externe Einheit (20) nach den Ansprüchen 15 und 16, wobei das Lösen der Verankerungsmittel an dem Satelliten (10) mit den Mitteln zum elektrischen Verbinden mit dem Raumfahrzeug (30) gekoppelt ist.

18. Externe Einheit (20) nach einem der Ansprüche 14 bis 17, umfassend Mittel zum gleichzeitigen Verankern an mehrere Satelliten (10).

19. Anordnung, umfassend:
- eine externe Einheit (20) nach einem der Ansprüche 14 bis 18, wobei der Treibstoffbehälter (21) Treibstoffe für einen elektrischen Antrieb enthält,
- und einen Satelliten (10), umfassend Verankerungsmittel, die geeignet sind, mit den Verankerungsmitteln der externen Einheit (20) zusammenzuwirken,
wobei die externe Einheit (20) durch Zusammenwirken der Verankerungsmittel des Satelliten (10) und der Verankerungsmittel der externen Einheit (20) an dem Satelliten (10) reversibel befestigt ist.

20. Anordnung nach Anspruch 19, umfassend, wobei die externe Einheit (20) mit Anspruch 18 konform ist, mehrere Satelliten (10), die jeweils Verankerungsmittel aufweisen, die geeignet sind, mit den Verankerungsmitteln der externen Einheit (20) zusammenzuwirken, wobei die externe Einheit (20) durch Zusammenwirken der Verankerungsmittel des Satelliten (10) und der Verankerungsmittel der externen Einheit (20) an jedem der Satelliten (10) reversibel befestigt ist.

21. System zur Übertragung eines Satelliten (10) aus einer ersten Umlaufbahn (63) in eine Missionsumlaufbahn (62) um einen Himmelskörper (60), umfassend:
- ein Raumfahrzeug (30) nach einem der Ansprüche 9 bis 13
- und eine externe Einheit (20) nach einem der Ansprüche 14 bis 18.

22. Verfahren zum Positionieren eines Satelliten (10) auf seiner Missionsumlaufbahn (62) um einen Himmelskörper (60), **dadurch gekennzeichnet, dass** es folgende Schritte aufweist:
- Befestigen an dem Satelliten (10) einer externen Einheit (20) nach einem der Ansprüche 14 bis 18 und Einführen von Treibstoffen für einen elektrischen Antrieb in den Treibstoffbehälter (21) der externen Einheit (20) derart, um eine Anordnung nach einem der Ansprüche 19 bis 20 zu bilden,
- Befördern (71) der Anordnung in den Weltraum und Beschleunigen auf Fluchtgeschwindigkeit (72) der Anordnung in einer ersten Umlaufbahn (63) um den Himmelskörper (60)
- und Umsetzen eines Verfahrens zur Übertragung nach einem der Ansprüche 1 bis 7, um die Übertragung der Anordnung aus der ersten Umlaufbahn (63) in die Missionsumlaufbahn (62) durchzuführen.

## Claims

1. A method of transfer of a satellite (10) from an initial orbit (63) to a mission orbit (62) of said satellite (10) around a celestial body (60), comprising:
- in said initial orbit (63), a step of docking (74):
• of a spacecraft (30) comprising an electrical propulsion module (37) and a fluidic propellant supply circuit (39) for supplying propellant to said propulsion module (37),
• to an external propellant supply unit (20), comprising a propellant tank (21) containing a reserve of propellant (22) and anchored to said satellite by cooperating anchoring means carried respectively by said external unit (20) and by said satellite (10),
said spacecraft (30) and said external unit (20) comprising cooperating docking means for reversible docking of one to the other, comprising means (38, 25) of fluidic connection of said propellant tank (21) with said fluidic circuit (39) such that said docking step realizes a fluidic connection between said fluidic circuit (39) of the spacecraft (30) and said propellant tank (21) of the external unit (20), thus enabling the supply of propellant to said propulsion module (37) from said external unit (20);
- a step of transfer (75) of said spacecraft (30) so docked to an assemblage consisting of said external unit (20) anchored to said satellite (10) to said mission orbit (62), by means of the electrical propulsion module (37) of said spacecraft (30) supplied with propellant from the propellant tank (21) of the external unit (20),
- and a step of releasing (76) said satellite (10) into said mission orbit (62).

2. The method of transfer as claimed in claim 1, whereby during the transfer step the spacecraft (30) is supplied with propellant directly from the propellant tank (21) of the external unit (20).

3. The method of transfer as claimed in any one of claims 1 to 2, comprising a previous rendezvous step (73), in the initial orbit (63) of said spacecraft (30), with said assemblage.

4. The method as claimed in any one of claims 1 to 3, whereby the means of anchoring the external unit (20) to the satellite (10) are of the type releasable on command to produce the separation of said external unit (20) and said satellite (10), and the step of releasing (76) said satellite (10) into the mission orbit (62) is accomplished by command for releasing the anchoring means anchoring said external unit (20) to said satellite (10).

5. The method as claimed in any one of claims 1 to 4, whereby the spacecraft (30) comprises a propellant reservoir (35) in fluidic connection with the fluidic circuit (39), and said method involves, between the docking step (74) and the transfer step (75), a step of transfer of propellant from the propellant tank (21) of the external unit (20) to said propellant reservoir (35) of the spacecraft (30).

6. The method as claimed in claim 5, whereby the propellant contained in the propellant tank (21) of the external unit (20) is of gaseous type, and the step of transfer of propellant from the propellant tank (21) of the external unit (20) to the propellant reservoir (35) of the spacecraft (30) is accomplished by fluidic connection of said propellant tank (21) and said propellant reservoir (35), so as to allow said transfer of propellant by equilibration of pressures between said propellant tank (21) and said propellant reservoir (35).

7. The method as claimed in any one of claims 1 to 6, involving, after the step (76) of releasing the satellite (10) into the mission orbit (62), a step (79) of moving said spacecraft (30) to a so-called parking orbit (64).

8. A method of remote control of a spacecraft (30) for the carrying out of the steps of a method of transfer as claimed in any one of claims 1 to 7, said spacecraft (30) comprising an electrical propulsion module (37), a fluidic propellant supply circuit (39) for supplying propellant to said propulsion module (37), and docking means for reversible docking to an external propellant supply unit (20), comprising means (38) of fluidic connection of said external unit (20) to said fluidic circuit (39) enabling the supply of propellant to said propulsion module (37) from said external unit (20),
whereby said spacecraft (30) is remotely controlled by a control unit (50), control signals being successively determined and sent to said spacecraft (30) by said control unit (50) to carry out said steps.

9. A spacecraft (30) for carrying out a method of transfer as claimed in any one of claims 1 to 7, comprising:
- an electrical propulsion module (37),
- a fluidic propellant supply circuit (39) for supplying propellant to said propulsion module (37),
- and a propellant reservoir (35), in fluidic connection with said fluidic supply circuit (39),
- docking means for reversible docking of said spacecraft (30) to an external propellant supply unit (20), comprising means (38) of fluidic connection of said fluidic circuit (39) to said external unit (20),
said fluidic circuit (39) being configured to allow a fluidic connection between said propellant reservoir (35) and said external unit (20), **characterized in that** said fluidic circuit (39) is configured to allow the direct supplying of propellant to said propulsion module (37) from said external unit (20), without passing through the propellant reservoir (35) of the spacecraft (30).

10. The spacecraft (30) as claimed in claim 9, wherein the fluidic circuit (39) comprises sealing means (44, 45) able to move between a closure position, preventing the circulation of fluid in said fluidic circuit between the propellant reservoir (35) and the propulsion module (37), and an opening position enabling said circulation of fluid, and means of actuating said sealing means (44, 45) between said closure position and said opening position.

11. The spacecraft (30) as claimed in any one of claims 9 to 10, wherein the fluidic circuit (39) comprises a sealing member (43) enabling the circulation of fluid from the means of fluidic connection (38) to the propellant reservoir (35), and preventing the passage of fluid from said propellant reservoir (35) to said means of fluidic connection (38).

12. The spacecraft (30) as claimed in any one of claims 9 to 11, comprising means of rendezvous with the external unit (20) located in the initial orbit (63).

13. The spacecraft (30) as claimed in any one of claims 9 to 12, comprising means of electrical connection with the external unit (20).

14. An external unit (20) for implementing a method of transfer as claimed in any one of claims 1 to 7, comprising a propellant tank (21), comprising:
- anchoring means for anchoring to a satellite (10), situated in a first zone of said external unit (20),
- and docking means able to cooperate with reversible docking means of a spacecraft (30), situated in a second zone of said external unit (20) and comprising means (25) of fluidic connection of said propellant tank (21) to said spacecraft (30).

15. The external unit (20) as claimed in claim 14, wherein the anchoring means for anchoring to the satellite (10) are of the type releasable on command to bring about the separation of said external unit (20) and said satellite (30).

16. The external unit (20) as claimed in any one of claims 14 to 15, comprising means of electrical connection to the spacecraft (30).

17. The external unit (20) as claimed in claims 15 and 16, wherein the releasing of the anchoring means for anchoring to the satellite (10) is slaved to the means of electrical connection to the spacecraft (30).

18. The external unit (20) as claimed in any one of claims 14 to 17, comprising anchoring means for simultaneous anchoring to a plurality of satellites (10).

19. An assemblage comprising:
- an external unit (20) according to any one of claims 14 to 18, in which the propellant tank (21) contains propellant for electrical propulsion,
- and a satellite (10) comprising anchoring means able to cooperate with the anchoring means of said external unit (20),
said external unit (20) being secured, in reversible manner, to said satellite (10) by cooperation of the anchoring means of the satellite (10) and the anchoring means of the external unit (20).

20. The assemblage as claimed in claim 19, the external unit (20) being as claimed in claim 18, comprising a plurality of satellites (10), each comprising anchoring means able to cooperate with the anchoring means of said external unit (20), said external unit (20) being secured, in reversible manner, to each of said satellites (10) by cooperation of the anchoring means of the satellite (10) and the anchoring means of the external unit (20).

21. A system for the transfer of a satellite (10) from an initial orbit (63) to a mission orbit (62) around a celestial body (60), comprising:
- a spacecraft (30) as claimed in any one of claims 9 to 13,
- and an external unit (20) as claimed in any one of claims 14 to 18.

22. A method of positioning a satellite (10) in its mission orbit (62) around a celestial body (60), **characterized in that** it involves the steps of:
- attachment to said satellite (10) of an external unit (20) as claimed in any one of claims 14 to 18, and introduction of propellant for electrical propulsion into the propellant tank (21) of said external unit (20), so as to form an assemblage as claimed in any one of claims 19 to 20,
- launching (71) said assemblage into space, and injection (72) of said assemblage into an initial orbit (63) around said celestial body (60);
- and carrying out a method of transfer as claimed in any one of claims 1 to 7, to realize the transfer of said assemblage from said initial orbit (63) to said mission orbit (62).
